# FASCICULE DE BREVET EUROPEEN

(11) **EP 3 512 751 B1**
(45) Date de publication et mention de la délivrance du brevet: **29.07.2020**
(21) Numéro de dépôt: 17730808.7
(22) Date de dépôt: 19.06.2017
(51) Int. Cl.: B62B 5/08, B62B 9/28

(54) **ACCESSOIRE POUR POUSSETTE, AINSI QU'ENSEMBLE DE TRANSPORT COMPRENANT UNE POUSSETTE ET UN TEL ACCESSOIRE**
KINDERWAGENZUBEHÖR UND TRANSPORTANORDNUNG MIT EINEM KINDERWAGEN UND SOLCH EINEM ZUBEHÖR
PUSHCHAIR ACCESSORY, AND A TRANSPORT ASSEMBLY COMPRISING A PUSHCHAIR AND SUCH AN ACCESSORY

(30) Priorité: 14.09.2016 FR 1658570
(43) Date de publication de la demande: 24.07.2019
(73) Titulaire: BABYZEN, 13100 Aix-en-Provence (FR)
(72) Inventeur: CHAUDEURGE, Jean-Michel, 83170 Tourves (FR)
(74) Mandataire: Lavoix
(86) Numéro de dépôt international: PCT/EP2017/064956
(87) Numéro de publication internationale: WO 2018/050303

(56) Documents cités:
- EP-A1- 2 495 152
- WO-A1-2005/039954
- WO-A1-2007/033562
- DE-A1-102010 016 921
- DE-U1- 20 213 848
- GB-A- 2 496 756
- US-A- 2 216 584
- US-A- 3 387 859
- US-A1- 2004 164 510

## Description

La présente invention concerne un accessoire pour poussette, ainsi qu'un ensemble de transport comprenant une poussette et un tel accessoire.

L'invention s'intéresse plus spécifiquement aux accessoires de poussette roulants, tels que les planches de poussette qui, dans le commerce, sont parfois désignées sous le terme anglais de « board » ou de « kiddy board ». Ces planches de poussette comprennent un châssis formant plateforme, qui est pourvu de roues et qui est prévu pour être connecté à la partie arrière du cadre d'une poussette. Une fois connectée, la planche roule sur le sol, tout en étant entraînée par la poussette, typiquement poussée par un adulte. L'ensemble de transport, formé de la poussette et de la planche connectée à cette dernière, permet de transporter à la fois un premier enfant, installé dans la poussette, et un second enfant, généralement plus âgé que le premier enfant, se tenant debout sur la plateforme du châssis de la planche. Un tel ensemble répond à la problématique de devoir se déplacer avec deux enfants d'âge rapproché, l'aîné savant marcher alors que le cadet marche moins bien, voire ne sait pas encore marcher : alors que le cadet se fait véhiculer dans la poussette poussée par un adulte, l'aîné manifeste rapidement l'envie de se faire véhiculer lui aussi, ce qui est rendu possible en le faisant monter sur la planche, l'aîné se retrouvant alors placé entre l'adulte, qui pousse l'ensemble de transport, et le cadet porté dans la poussette.

En pratique, les poussettes n'intègrent pas de telles planches à demeure. Au contraire, les planches sont prévues en tant qu'accessoires distincts de la poussette, que l'utilisateur doit rapporter à la poussette lorsqu'il le souhaite. La connexion de la planche est typiquement réversible, pour permettre à l'utilisateur de dégager la planche lorsqu'il n'en a plus l'utilité. Pour ce faire, la solution actuelle est de recourir à des dispositifs de connexion dits universels, qui se fixent à la partie arrière du cadre des poussettes et auxquels le châssis de la planche est accroché. Ces dispositifs de connexion sont conçus pour s'adapter à diverses formes de cadres de poussette et incluent généralement une mâchoire pour ceinturer et mettre en prise une partie tubulaire de ce cadre, généralement par serrage, pincement, blocage, coincement, sanglage, etc. Une même planche peut inclure deux dispositifs de connexion, qui se fixent à des régions respectivement gauche et droite du cadre de la poussette. Des exemples sont donnés dans WO 2005/039954, DE 10 2010 016 921, DE 202 13 848 et US 2004/0164510. Dans tous les cas, ces dispositifs de connexion sont à la fois fastidieux à mettre en œuvre, en nécessitant l'utilisation d'outils et/ou en requérant la manipulation de plusieurs pièces, ne sont pas toujours sûrs du fait de leur complexité de mise en œuvre, s'avèrent particulièrement inesthétiques, en formant des zones renflées sur l'arrière du cadre de la poussette, peuvent empêcher le repliement de la poussette tant qu'ils ne sont pas complètement retirés, et conduisent fréquemment à endommager le cadre de poussette.

De son côté, US 3 387 859, qui peut être considéré comme l'état de la technique le plus proche de l'invention, divulgue un chariot pour une motocyclette. Ce chariot comporte un châssis, qui est pourvu d'une roue d'appui et de roulement au sol et qui inclut, sur chacun de ses côtés latéraux, une barre s'étendant à l'horizontale lorsque le chariot est connecté à la motocyclette. Les deux barres du chariot sont espacées et en regard l'une de l'autre. Chacune de ces barres inclut une partie avant se terminant par une extrémité libre qui est équipée d'un système de couplage incluant un coulisseau actionné par un ressort de compression : en l'absence de sollicitation, le ressort de compression de chaque système de couplage maintient le coulisseau correspondant dans une position déployée dans laquelle un pion, qui forme l'extrémité de ce coulisseau tournée vers le coulisseau de l'autre système de couplage, s'étend en saillie vers ce dernier depuis la face de la barre correspondante, tournée vers l'autre barre. Pour connecter le chariot à un cadre arrière de la motocyclette, les parties avant respectives des barres du châssis sont à positionner de part et d'autre de la roue arrière de la motocyclette de sorte que le cadre arrière de la motocyclette se retrouve entre le système de couplage d'une des barres précitées et le système de couplage de l'autre barre : le pion de chaque système de couplage peut alors coopérer avec un élément dédié du cadre arrière, plus précisément coopérer avec la face de cet élément tournée vers l'extérieur, c'est-à-dire tournée à l'opposé de la roue arrière de la motocyclette. Bien entendu, dans la pratique, deux opérateurs sont nécessaires pour rapporter et connecter le chariot au cadre arrière de la motocyclette, l'un de ces deux opérateurs devant tenir l'une des deux barres précitées du châssis et actionner le système de couplage correspondant pendant que l'autre opérateur doit tenir l'autre barre et actionner le système de couplage de cette dernière. De même, deux opérateurs sont nécessaires pour déconnecter et dégager le chariot vis-à-vis du cadre arrière de la motocyclette. De plus, les systèmes de couplage forment, de part et d'autre du cadre arrière de la motocyclette, des protubérances saillantes, à la fois dangereuses et disgracieuses.

Le but de la présente invention est de proposer un accessoire de poussette qui puisse être connecté solidement, efficacement, esthétiquement et très facilement.

A cet effet, l'invention a pour objet un accessoire pour poussette, tel que défini à la revendication 1.

L'invention a également pour objet un ensemble de transport, tel que défini à la revendication 7.

Ainsi, une des idées à la base de l'invention est de pouvoir connecter et déconnecter l'accessoire conforme à l'invention de manière instantanée, c'est-à-dire sans utiliser d'outil ni ajouter ou retirer des pièces distinctes de celles déjà intégrées au dispositif de connexion de l'accessoire, ce dispositif de connexion étant actionnable d'une seule main par l'utilisateur. Pour ce faire, le dispositif de connexion comporte deux éléments mâles mobiles, tels que des pions ou similaires, qui sont commandés en déplacement par un mécanisme d'actionnement, intégré au dispositif de connexion et conçu pour être sollicité d'une seule main : lors de sa sollicitation, le mécanisme amène les éléments mâles dans une position de déconnexion où ils autorisent le déplacement relatif entre l'accessoire et le cadre de poussette, notamment pour dégager l'accessoire vis-à-vis de la poussette, tandis qu'en l'absence de sollicitation, le mécanisme ramène automatiquement les éléments mâles dans une position de connexion où ils sont conçus pour se loger dans des emplacements femelles complémentaires du cadre de la poussette, prévus dans des montants, respectivement gauche et droit, de parties arrières, respectivement gauche et droite, de ce cadre. Ces emplacement femelles sont creusés dans des faces respectives des montants gauche et droit de la poussette, qui sont tournées l'une vers l'autre : le dispositif de connexion est conçu pour être placé entre ces faces des montants de manière à pouvoir être rapporté entre les montants pour connecter l'accessoire au cadre de la poussette et à pouvoir être retiré d'entre les montants pour dégager l'accessoire vis-à-vis de la poussette. Le dispositif de connexion est donc particulièrement facile à manipuler, étant remarqué que lors de la mise en place et du retrait de l'accessoire vis-à-vis de la poussette, l'utilisateur peut avantageusement tenir l'accessoire par sa seule main avec laquelle il sollicite le mécanisme du dispositif de connexion. Pour passer les éléments mâles de leur position de déconnexion à leur position de connexion afin qu'ils s'introduisent dans les logements femelles en vue de connecter l'accessoire lorsque le dispositif de connexion est rapporté entre les montants du cadre de la poussette, l'utilisateur libère la sollicitation manuelle, qu'il exerçait jusqu'alors pour maintenir les éléments mâles en position de déconnexion, et le mécanisme agit automatiquement sur les éléments mâles pour les engager au maximum dans les logements femelles, ce qui rend l'établissement de la connexion entre l'accessoire et la poussette particulièrement efficace et sûr. Une fois connecté, l'accessoire est lié solidairement à la poussette grâce à la coopération par complémentarité de formes entre les éléments mâles, maintenus en position de connexion par le mécanisme, et les logements femelles intégrés aux cadres de la poussette. Lorsque les éléments mâles sont maintenus en position de déconnexion par le mécanisme sollicité manuellement à cette fin, l'accessoire peut être librement dégagé vis-à-vis du cadre de la poussette, dont les logements femelles, alors vides, n'impactent pas l'esthétique d'ensemble du cadre de la poussette puisque, par définition, ces logements femelles ne sont pas saillants. D'autres avantages ressortiront dans la suite du présent document.

Suivant une forme de réalisation, l'accessoire conforme à l'invention est une planche de poussette, du type évoqué plus haut. Ceci étant, l'accessoire conforme à l'invention peut être réalisé sous d'autres formes, comme indiqué par la suite, son dispositif de connexion pouvant par ailleurs être prévu aussi bien intégré à demeure à l'accessoire, que porté de façon amovible par le châssis de ce dernier.

Des caractéristiques additionnelles avantageuses de l'accessoire et de l'ensemble de transport conformes à l'invention sont spécifiées aux autres revendications.

L'invention sera mieux comprise à la lecture de la description qui va suivre, donnée uniquement à titre d'exemple et faite en se référant aux dessins sur lesquels :
- la figure 1 est une vue en perspective d'un ensemble de transport conforme à l'invention ;
- la figure 2 est une vue en perspective d'une partie arrière de la poussette de l'ensemble de transport de la figure 1, cette poussette étant montrée seule ;
- la figure 3 est une vue schématique en élévation d'une partie de la poussette de la figure 2, avec coupe partielle selon le plan III de la figure 2 ;
- la figure 4 est une vue en perspective d'un accessoire appartenant à l'ensemble de transport de la figure 1, cet accessoire étant montré seul ;
- la figure 5 est une vue schématique en élévation d'une partie de l'ensemble de transport de la figure 1, avec coupe partielle selon le plan V de la figure 1 ;
- la figure 6 est une vue similaire à la figure 5, montrant l'ensemble de transport dans une configuration fonctionnelle différente de celle de la figure 5 ;
- les figures 7 et 8 sont des vues respectivement similaires aux figures 1 et 4, illustrant une autre forme de réalisation d'un accessoire conforme à l'invention, associée à la poussette de l'ensemble de transport de la figure 1 ;
- la figure 9 est une vue similaire aux figures 1 et 7, illustrant encore une autre forme de réalisation d'un accessoire conforme à l'invention, associée à la poussette de l'ensemble de transport de la figure 1 ;
- la figure 10 est une vue en perspective montrant, sous un angle d'observation différent de celui de la figure 9, uniquement l'accessoire de la figure 9 ;
- la figure 11 est une vue en perspective illustrant une configuration d'utilisation, avec la poussette, d'une partie de l'accessoire de la figure 9 ; et
- les figures 12 à 15 sont des vues en perspective de l'accessoire de la figure 9, utilisé avec la poussette de la figure 1, dans des configurations d'utilisation respectives qui sont différentes les unes des autres.

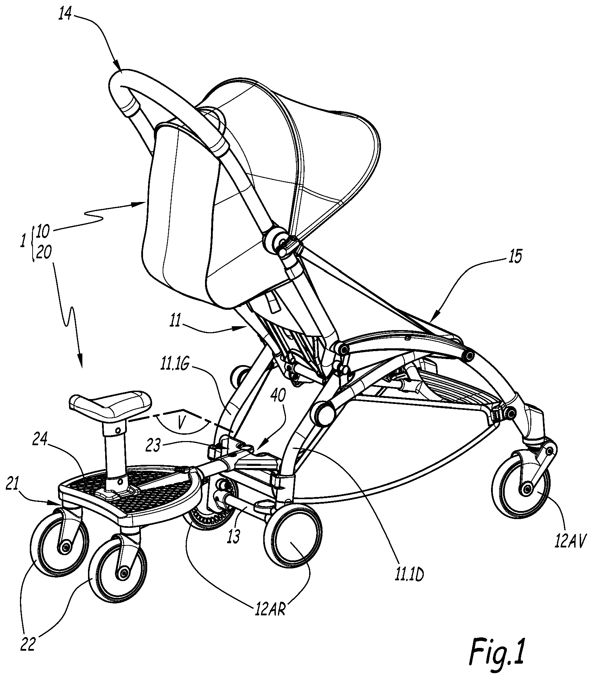

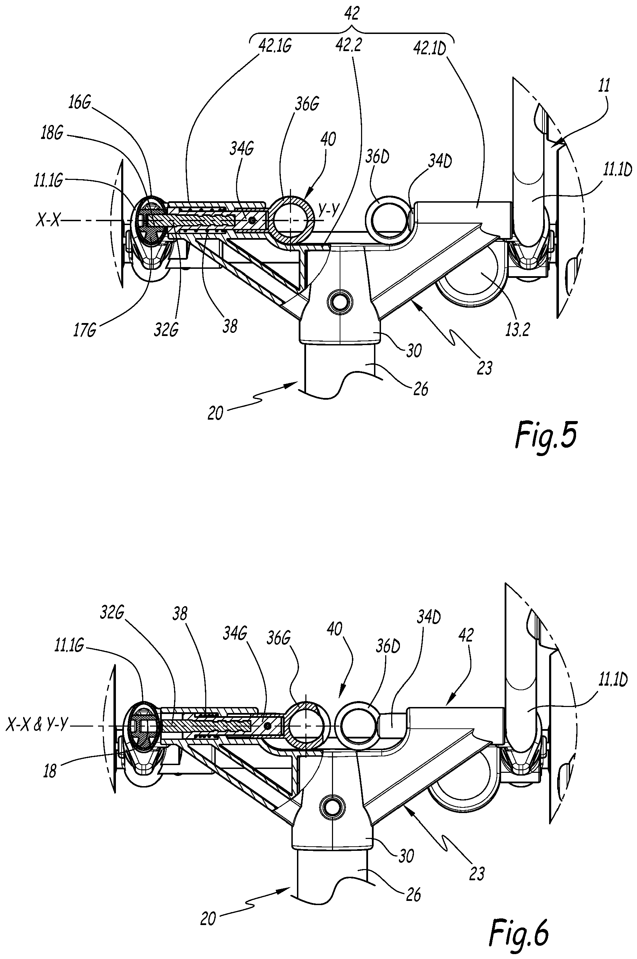

Sur les figures 1 à 6 est représenté un ensemble de transport 1 comprenant une poussette 10 et un accessoire de poussette 20. Sur les figures 1 et 5, l'accessoire 20 est connecté à la poussette 10, comme décrit plus en détail par la suite, tandis que sur les autres figures, l'accessoire 20 est déconnecté de la poussette 10.

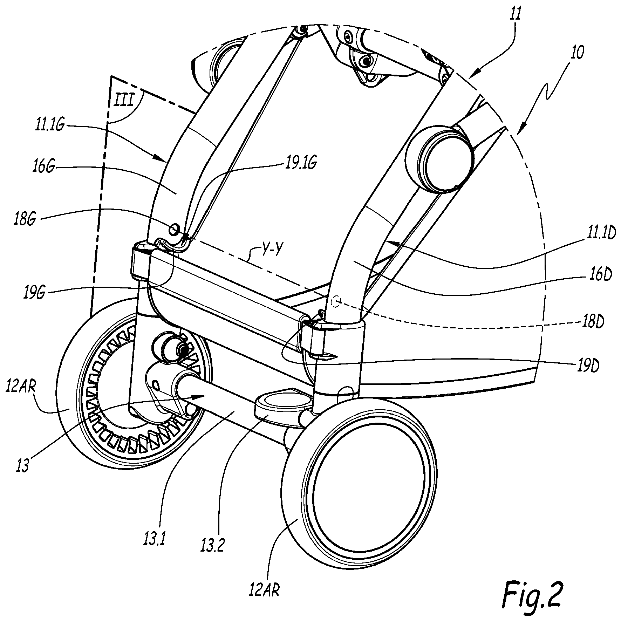

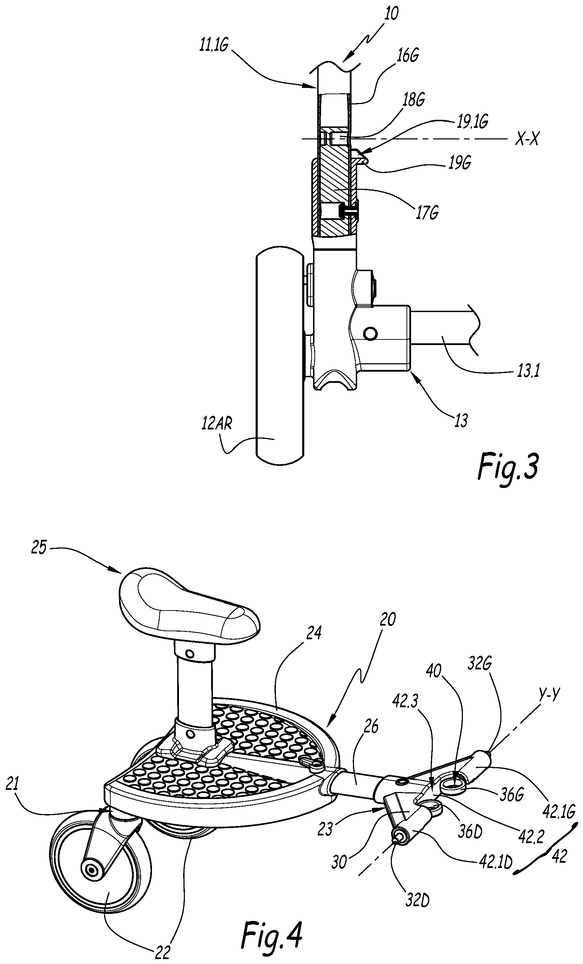

En dehors des aménagements de la poussette 10 qui permettent la connexion entre cette dernière et l'accessoire 20, la poussette 10 peut typiquement relever de ce qui est connu. Ainsi, la poussette 10 comporte un cadre 11, formant une ossature de support et par exemple réalisée principalement par assemblage de tubes, la structure tubulaire correspondante étant avantageusement repliable sur elle-même pour passer le cadre 11 d'une configuration déployée de service, telle que montrée sur la figure 1, et une configuration repliée de stockage. Sur son côté qui, en service, est normalement tourné vers le bas, le cadre 11 est pourvu de roues d'appui et de roulement au sol, ces roues incluant une ou plusieurs roues avant 12AV et des roues arrière 12AR. Dans l'exemple de réalisation considéré sur les figures, les roues arrière 12AR sont prévues au nombre de deux, en étant situées respectivement sur les côtés gauche et droit du cadre 11, comme bien visible sur les figures 1 à 3. Quel que soit le nombre de roues arrière 12AR, ces roues arrière 12AR sont avantageusement supportées par un train arrière 13 du cadre 11 : dans l'exemple considéré ici, ce train de roues arrière 13 inclut avantageusement une barre d'essieu 13.1 qui, comme bien visible sur les figures 2 et 3, a ses extrémités opposées qui supportent des moyeux respectifs des roues arrière 12AR. En dehors des aménagements du cadre 11 permettant de connecter l'accessoire 20 à la poussette 10, qui seront décrits plus en détail par la suite, le cadre 11 présente une forme de réalisation qui n'est pas limitative de l'invention.

De manière connue en soi pour une poussette, le cadre 11 de la poussette 10 est également pourvu :
- d'un organe de poussée 14, tel qu'une barre, des poignées, etc., cet organe de poussée 14 permettant à un adulte marchant derrière la poussette 10 de pousser le cadre 11 vers l'avant, en faisant rouler ce dernier sur le sol par ses roues 12AV et 12AR ; et
- un organe de réception 15, tel qu'un siège, une nacelle, un couffin, etc., cet organe de réception 15 permettant de réceptionner un enfant à véhiculer par la poussette 10, l'enfant étant installé dans cet organe de réception 15 en position assise, en position couchée ou dans une position intermédiaire entre ces dernières.

L'organe de poussée 14 et l'organe de réception 15 présentent des formes de réalisation qui ne sont pas limitatives de l'invention. D'ailleurs, cet organe de poussée et/cet organe de réception 15 peuvent présenter des aménagements additionnels, connus en tant que tels. A titre d'exemple, l'organe de réception 15 peut être porté de manière amovible par le cadre 11.

Dans l'exemple de réalisation considéré ici, comme bien visible sur les figures 2 et 3, des parties arrière, respectivement gauche 11.1G et droite 11.1D, du cadre 11 comportent des montants respectifs, à savoir un montant gauche 16G et un montant droit 16D. Ces montants 16G et 16D sont parallèles l'un à l'autre, en s'étendant vers le haut depuis le train de roues arrière 13. Comme montré sur la figure 3 pour le montant gauche 16G, chacun de ces montants 16G et 16D est intérieurement pourvu d'un insert 17G qui renforce le montant correspondant et qui forme une liaison mécanique entre le montant correspondant et le train de roues arrière 13, en particulier entre ce montant et l'extrémité correspondante, respectivement gauche ou droite, de la barre d'essieu 13.1 de ce train 13. Les aménagements de la liaison entre le train de roues arrière 13 et les inserts respectifs des montants 16G et 16D ne sont pas limitatifs, du moment que ces aménagement reportent efficacement au train de roues arrière 13 les charges appliquées aux montants 16G et 16D, plus généralement aux parties arrière gauche 11.1 G et 11.1D du cadre 11, notamment en conférant une grande robustesse à l'interface d'assemblage rigide entre les parties arrière gauche 11.1G et droite 11.1D du cadre 11 avec le train de roues arrière 13 de ce cadre.

Pour des raisons qui apparaîtront plus loin, les parties arrière gauche 11.1 G et droite 11.1D du cadre 11 sont chacune pourvues d'un logement femelle 18G, 18D. Comme bien visible sur les figures 2 et 3, ces logements femelles 18G et 18D sont respectivement creusés dans une face du montant gauche 16G et dans une face du montant droit 16D, qui sont en regard l'une de l'autre, et s'étendent respectivement dans l'épaisseur des inserts internes de ces montants. En d'autres termes, les logements femelles 18G et 18D sont, pour l'essentiel, délimités respectivement par les inserts internes des montants 16G et 16D, en débouchant sur l'extérieur de ces montants en traversant les portions respectives des montants 16G et 16D, tournées l'une vers l'autre, comme bien visible sur la figure 3 pour le montant gauche 16G, son insert 17G et le logement femelle 18G. Comme bien visible sur la figure 2, les logements femelles 18G et 18D sont avantageusement centrés sur un même axe géométrique X-X s'étendant perpendiculairement aux montants 16G et 16D.

Suivant une disposition optionnelle dont l'intérêt apparaîtra également plus loin, le cadre 11 est pourvu de berceaux, respectivement gauche 19G et droit 19D, qui sont respectivement associés aux logements femelles 18G et 18D. Comme bien visible sur la figure 2, ces berceaux 19G et 19D sont agencés au-dessous des logements femelles 18G et 18D : les berceaux 18G et 18D délimitent ainsi des surfaces supérieures respectives, dont celle du berceau 19G est bien visible sur les figures 2 et 3 et y est référencée 19.1G, qui s'étendent en saillie du montant correspondant 16G, 16D, en entourant une portion basse du pourtour du logement femelle correspondant 18G, 18D de manière concentrique à l'axe X-X. Dans l'exemple de réalisation considéré sur les figures, les berceaux 19G et 19D sont intégrés au train de roues arrière 13, en étant respectivement intégrés aux extrémités opposées de la barre d'essieu 13.1. D'autres formes de réalisation sont envisageables du moment que, en service, les berceaux 19G et 19D soient portés fixement par le cadre 11.

Comme bien visible sur les figures 1 et 4, l'accessoire 20 comporte un châssis 21 qui est principalement pourvu de :
- sur le côté du châssis 21 qui, en service, est tourné vers le sol, une ou plusieurs roues d'appui et de roulement au sol 22, et
- sur le côté avant du châssis 21, un dispositif 23 qui, comme expliqué plus en détail par la suite, permet de connecter de manière réversible l'accessoire 20 au cadre 11 de la poussette 10.

Dans l'exemple de réalisation considéré sur les figures, les roues 22 sont prévues en deux exemplaires, en étant toutes les deux situées à l'arrière du châssis 21. Ces deux roues 22 sont avantageusement prévues omnidirectionnelles, étant précisé qu'on entend ici par « roue omnidirectionnelle » une roue dont l'axe de rotation, autour duquel cette roue tourne sur elle-même lorsqu'elle roule sur le sol, est prévu, typiquement par le biais d'une chape supportant l'axe de rotation de part et d'autre de la roue, librement pivotant par rapport au reste du châssis 21 autour d'un axe de pivotement qui s'étend de manière radiale ou orthoradiale à l'axe de rotation, de façon que la roue puisse, indépendamment de son roulement autour de son axe de rotation, pivoter autour de l'axe de pivotement et ainsi modifier l'orientation de la roue par rapport au reste du châssis 21 et donc la direction de progression pour le châssis sur le sol. Ce genre de roue, appelé ici roue omnidirectionnelle, est aussi appelé parfois « roulette pivotante ». Ceci étant, le nombre, la position et les aménagements intrinsèques des roues 22 de l'accessoire 20 ne sont pas limitatifs et peuvent différer de l'exemple considéré ici.

Dans la forme de réalisation considérée sur les figures, le châssis 21 comporte une plateforme 24 qui, lorsque l'accessoire 20 est connecté au cadre 11 de la poussette 10 par le dispositif 23, s'étend globalement à l'horizontale, en particulier pour sa face tournée vers le haut. En service, cette plateforme 24 permet de recevoir un enfant se tenant debout sur la face de la plateforme, tournée vers le haut. Suivant un aménagement optionnel, montré sur les figures 1 et 4, la plateforme 24 est équipée d'une selle 25 sur laquelle un enfant se tenant sur la plateforme 24 peut s'asseoir. En d'autres termes, lorsque l'accessoire 20 est connecté à la poussette 10, le châssis 21 peut, tout en roulant sur le sol par l'intermédiaire de ses roues 22, supporter un enfant se tenant debout ou assis sur la plateforme 24. L'accessoire 20 s'apparente ainsi à une planche de poussette, telle que celles évoquées dans la partie introductive du présent document. En pratique, et de manière non limitative, la selle 25 peut être prévue amovible vis-à-vis du reste de la plateforme 24. Plus globalement, les aménagements de la plateforme 24 relatifs à la réception et l'installation d'un enfant véhiculé par l'accessoire 20 ne sont pas limitatifs de l'invention.

Afin de connecter l'accessoire 20 à la poussette 10, le dispositif 23 de l'accessoire 20 est rapporté au niveau des parties arrière gauche 11.1G et droite 11.1D du cadre 11, en particulier entre les montants gauche 16G et droit 16D, comme bien visible sur les figures 1, 5 et 6. Pour minimiser l'encombrement de l'accessoire 20 à proximité immédiate du cadre 11, le châssis 21 comporte avantageusement une tige 26 : comme montré sur les figures 1 et 4 à 6, cette tige 26 prolonge la plateforme 24 vers l'avant et l'extrémité avant de la tige 26 porte le dispositif 23. Ainsi, de part et d'autre de la tige 26, cette dernière laisse libre l'accès aux flancs arrière, respectivement gauche et droit, du cadre 11. Dans l'exemple de réalisation considéré sur les figures, cet aménagement laisse ainsi libre l'accès à un organe de commande de freinage 13.2 de la poussette 10, porté par la partie droite du train de roues arrière 13, comme bien visible sur les figures 5 et 6.

Comme montré sur les figures 4 à 6, le dispositif 23 comporte un support 30 qui, en service, est lié fixement au châssis 21, en particulier à l'extrémité avant de la tige 26 dans l'exemple considéré ici. En pratique, la liaison fixe entre le support 30 et le châssis 21 peut être réalisée soit à demeure, le support 30 étant alors porté irrémédiablement par le châssis 21, soit de manière amovible, le support 30 et, par-là, le dispositif 23 pouvant alors être détachés du châssis 21, plus généralement détachés du reste de l'accessoire 20. En d'autres termes, le dispositif 23 peut aussi bien être intégré à demeure à l'accessoire 20, qu'être séparable du reste de l'accessoire 20. Les aménagements correspondants du dispositif 23 et du châssis 21, qui réalisent la liaison fixe entre eux lorsque l'accessoire 20 est en service, ne sont pas limitatifs de l'invention et sont mis en oeuvre par des dispositions connues en soi, qui ne seront pas détaillées ici plus avant.

Le dispositif 23 comporte également deux éléments mâles, respectivement gauche 32G et droit 32D, visibles sur les figures 4 à 6. Chacun des éléments mâles 32G et 32D est supporté par le support 30 de manière mobile par rapport au châssis 21, entre une position de connexion, qui est montrée sur les figures 4 et 5 et dans laquelle l'élément mâle 32G, 32D est déployé vis-à-vis du support 30, et une position de déconnexion, qui est montrée sur la figure 6 et dans laquelle l'élément mâle est escamoté vis-à-vis du support 30. Lorsque le dispositif 23 est rapporté aux parties arrière gauche 11.1G et droite 11.1D du cadre 11, en particulier entre les montants 16G et 16D, plus précisément au niveau des logements femelles 18G et 18D, les éléments mâles 32G et 32D sont, en position de connexion, respectivement reçus dans les logements femelles 18G et 18D, comme cela est montré sur la figure 5 pour l'élément mâle gauche 32G et le logement femelle gauche 18G, tandis que les éléments mâles 32G et 32D sont, en position de déconnexion, hors des logements femelles 18G et 19G, comme cela est montré sur la figure 6 pour l'élément mâle gauche 32G et le logement femelle gauche 18G. Chacun des éléments mâles 32G et 32D est prévu complémentaire, à des jeux fonctionnels près, du logement femelle 18G, 18D, auquel il est associé, de manière à être reçu dans ce logement de manière complémentaire, comme bien visible sur la figure 5. A titre d'exemple non limitatif, les éléments mâles 32G et 32D comprennent, voire consistent en des pions, étant entendu que diverses formes de réalisation sont envisageables du moment que ces dernières assurent la complémentarité de formes entre les éléments mâles et les logements femelles 18G et 18D.

Suivant une disposition pratique particulièrement avantageuse, les éléments mâles 32G et 32D sont centrés sur un même axe géométrique Y-Y et sont mobiles en translation selon cet axe Y-Y entre leur position de connexion et leur position de déconnexion. Lorsque le dispositif 23 est rapporté aux parties arrières 11.1 G et 11.1D du cadre 11 au niveau de leur logement femelle 18G et 18D pour connecter l'accessoire 20 à la poussette 10, l'axe Y-Y des éléments mâles 32G et 32D est sensiblement confondu avec l'axe X-X des logements femelles 18G et 18D, comme montré sur les figures 5 et 6. Pour passer de sa position de déconnexion à sa position de connexion, chacun des éléments mâles 32G et 32D se translate selon l'axe Y-Y à l'intérieur du logement femelle correspondant 18G, 18D, tandis que, pour passer de sa position de connexion à sa position de déconnexion, chacun des éléments mâles 32G et 32D se translate également selon l'axe Y-Y, mais en sens opposé de manière à sortir en totalité du logement femelle correspondant 18G, 18D. Pour l'exemple de réalisation considéré sur les figures, dans la mesure où les logements femelles 18G et 18D sont en regard axial l'une de l'autre, les sens de translation selon lesquels les éléments mâles 32G et 32D passent de leur position de connexion à leur position de déconnexion, sont opposés l'un à l'autre : autrement dit, lorsque les éléments mâles 32G et 32D se translatent de leur position de connexion à leur position de déconnexion, ils se rapprochent l'un de l'autre selon l'axe Y-Y, comme bien visible par comparaison des figures 5 et 6.

Suivant une disposition optionnelle avantageuse, qui est mise en oeuvre dans l'exemple de réalisation considéré ici, chacun des éléments mâles 32G et 32D et son logement femelle correspondant 18G, 18D sont conformés pour pivoter l'un par rapport à l'autre autour de l'axe Y-Y lorsque l'élément mâle est en position de connexion. En pratique, les éléments mâles 32G et 32D et les logements femelles 18G et 18D présentent à cet effet une conformation cylindrique complémentaire, centrée sur les axes X-X et Y-Y. Quelles que soient les spécificités des aménagements respectifs des éléments mâles 32G et 32D et des logements femelles 18G et 18D permettant ce pivotement, une liaison pivot autour de l'axe Y-Y, entre le dispositif 23 et le cadre 11, est ainsi formée conjointement par les éléments mâles 32G et 32D en position de connexion et les logements femelles 18G et 18D : il en résulte que lorsque l'accessoire 20 est connecté à la poussette 10, le franchissement d'obstacles et, plus généralement, le déplacement sur sol irrégulier sont facilités pour l'ensemble de transport 1, par libre pivotement relatif entre la poussette 10 et l'accessoire 20 autour de l'axe Y-Y.

Le dispositif 23 comporte en outre des organes, respectivement gauche 34G et droit 34D, permettant d'entraîner respectivement les éléments mâles 32G et 32D de façon manuelle de leur position de connexion à leur position de déconnexion. Chacun des organes 34G et 34D est lié cinématiquement à l'élément mâle correspondant 32G, 32D entre la position de connexion et la position de déconnexion de cet élément mâle. En pratique, la forme de réalisation pour cette liaison cinématique n'est pas limitative de l'invention. Suivant une forme pratique, qui est mise en oeuvre dans l'exemple considéré ici, chacun des organes 34G et 34D est solidarisé fixement à l'élément mâle correspondant 32G, 32D, en particulier à la partie de ce dernier qui n'est pas introduite à l'intérieur du logement femelle correspondant 18G, 18D lorsqu'il est en position de connexion. A titre d'exemple, chacun des organes 34G et 34D comporte ainsi une barre à l'intérieur de laquelle est solidarisée, par exemple par emmanchement ou surmoulage, la partie précitée de l'élément mâle correspondant 32G, 32D, comme bien visible sur les figures 5 et 6. En variante non représentée, chacun des éléments mâles 32G et 32D et son organe associé 34G, 34D peuvent aussi être monoblocs.

En pratique, le support 30 supporte les organes 34G et 34D, tout en permettant leur déplacement aux fins de l'entraînement manuel des éléments mâles 32G et 32D.

Quelle que soit la forme de réalisation de chacun des organes 34G et 34D, cet organe est pourvu d'un relief 36G, 36D permettant la préhension et, par-là, la commande en déplacement de l'organe correspondant, par la main d'un utilisateur. Suivant une forme de réalisation pratique et peu encombrante, mise en œuvre dans l'exemple considéré ici, les reliefs 36G et 36D sont respectivement portés par l'extrémité de l'organe correspondant 34G, 34D, opposée à l'élément mâle correspondant 32G, 32D.

Dans tous les cas, les reliefs 36G et 36D sont conformés pour être sollicités conjointement par une même main d'un utilisateur pour commander en déplacement conjointement les organes 34G et 34D et, par-là, entraîner conjointement les éléments mâles 32G et 32D de leur position de connexion à leur position de déconnexion. A cet effet, la forme de réalisation des reliefs 36G et 36D n'est pas limitative du moment qu'une même main de l'utilisateur puisse conjointement solliciter les deux reliefs 36G et 36D de manière que, d'une part, cette sollicitation puisse être amorcée alors que les deux éléments mâles 32G et 32D sont dans leur position de connexion et, d'autre part, cette sollicitation puisse être poursuivie jusqu'à entraîner, par l'intermédiaire des organes 34G et 34D, les deux éléments mâles 32G et 32D jusqu'à leur position de déconnexion. En pratique, de multiples conformations géométriques sont envisageables pour les reliefs 36G et 36D : dans l'exemple de réalisation considéré sur les figures, les reliefs 36G et 36D comprennent chacun un œillet à profil circulaire, qui, à titre de variante non représentée, pourrait être à profil ovale, rectangulaire, carré, à motif arbitraire, etc. Egalement à titre de variante non représentée, plutôt que d'être à profil fermé comme les œillets envisagés sur les figures, les reliefs 36G et 36D peuvent présenter des profils ouverts, par exemple en « U », en « C », à motifs arbitraires, etc.

Pour faciliter leur préhension manuelle, les reliefs 36G et 36D sont avantageusement dimensionnés pour être chacun sollicité par un doigt de l'utilisateur : ainsi, les reliefs 36G et 36D peuvent alors être sollicités respectivement par deux doigts d'une même main de l'utilisateur pour entraîner conjointement les deux éléments mâles 32G et 32D. Cette disposition peut être mise en œuvre par les diverses conformations géométriques évoquées précédemment pour les reliefs 36G et 36D, du moment que chacun de ces reliefs soit dimensionné en lien avec la taille d'un doigt humain.

Dans le prolongement des considérations qui précèdent, et dans la forme de réalisation, telle que celle montrée sur les figures, où les éléments mâles 32G et 32D sont mobiles en translation selon l'axe Y-Y en se rapprochant l'un de l'autre pour passer de leur position de connexion à leur position de déconnexion, les organes 34G et 34D, également mobiles en translation selon l'axe Y-Y, ont avantageusement leurs reliefs 36G et 36D qui se rapprochent l'un de l'autre selon l'axe Y-Y lorsqu'ils sont sollicités manuellement pour entraîner conjointement les éléments mâles 32G et 32D de leur position de connexion à leur position de déconnexion : en sollicitant respectivement les reliefs 36G et 36D par deux doigts d'une même main, tels que le pouce et l'index, l'utilisateur peut ainsi facilement entraîner conjointement les éléments mâles 32G et 32D de leur position de connexion à leur position de déconnexion, en resserrant ses deux doigts, c'est-à-dire en les rapprochant l'un de l'autre, typiquement en faisant travailler sa main en pincement, ce resserrement induisant le rapprochement, selon l'axe Y-Y, des reliefs 36G et 36D, comme bien visible par comparaison des figures 5 et 6.

Le dispositif 23 comporte également des ressorts, à savoir un ressort gauche et un ressort droit, seul le ressort gauche étant visible sur les figures 5 et 6 sous la référence 38. Ces deux ressorts sont supportés par le support 30. Par la suite, seul le ressort gauche 38 est décrit en détail, étant noté que le ressort droit est similaire au ressort gauche 38, en coopérant avec la partie droite du dispositif 23 de la même manière que coopère le ressort gauche avec la partie gauche de ce dispositif 23. Le ressort gauche 38 est mécaniquement interposé entre l'organe gauche 34G et le support 30 de manière à rappeler élastiquement cet organe 34G pour passer l'élément mâle gauche 32G de sa position de déconnexion à sa position de connexion en l'absence de sollicitation sur le relief 36G. Dans l'exemple de réalisation considéré sur les figures, le ressort gauche 38 est un ressort de compression qui est supporté par le support 30 de manière à travailler en extension, notamment selon l'axe Y-Y, entre ce support 30 et l'organe 34G : lorsque l'organe 34G est commandé en déplacement par sollicitation manuelle de l'utilisateur pour entraîner l'élément mâle gauche 32G de sa position de connexion à sa position de déconnexion, le ressort 38 est mis en compression, notamment par raccourcissement de sa dimension selon l'axe Y-Y, si bien que lorsque la sollicitation manuelle est relâchée, le ressort 38 se détend élastiquement et commande donc automatiquement le déplacement de l'organe 34G en sens opposé, autrement dit de manière à entraîner l'élément mâle gauche 32G de sa position de déconnexion à sa position de connexion. Bien entendu, d'autres formes de réalisation sont envisageables pour le ressort 38 du moment qu'elles assurent le rappel élastique de l'élément mâle gauche 32G de sa position de déconnexion à sa position de connexion. Quelle que soit sa forme de réalisation, on comprend que le ressort 38 maintient élastiquement l'élément mâle gauche 32G dans sa position de connexion tant que l'utilisateur n'applique pas à l'organe 34G une sollicitation manuelle surmontant la résistance élastique du ressort 38 en vue d'entraîner l'élément mâle gauche 32G de sa position de connexion à sa position de déconnexion.

On rappellera que, comme indiqué plus haut, le ressort droit du dispositif 23, non visible sur les figures, produit, sur l'élément mâle droit 32D et l'organe 34D, un effet similaire à celui que produit le ressort gauche 38 sur l'élément mâle gauche 32G et l'organe 34G.

En tenant compte des explications données jusqu'ici, on comprend que les organes 34G et 34D et les ressorts gauche 38 et droit du dispositif 23 forment ensemble un mécanisme 40 permettant d'actionner les éléments mâles 32G et 32D de sorte que :
- par sollicitation de ce mécanisme 40, notamment au niveau de ses reliefs 36G et 36D, appliquée d'une seule main par l'utilisateur, le mécanisme 40 entraîne, notamment par l'intermédiaire de ses organes 34G et 34D, conjointement les éléments mâles 32G et 32D de leur position de connexion à leur position de déconnexion, et
- en l'absence de sollicitation manuelle appliquée au mécanisme 40, ce dernier rappelle automatiquement, notamment par l'intermédiaire de ses ressorts gauche 38 et droit, les éléments mâles 32G et 32D de leur position de déconnexion à leur position de connexion.

Bien entendu, la forme de réalisation du mécanisme 40, basée sur les organes 34G et 34D et les ressorts gauche 38 et droit, n'est qu'un exemple constructif possible de ce mécanisme 40, de multiples formes de réalisation, basées sur les variantes évoquées jusqu'ici ainsi que sur les connaissances générales de l'homme du métier, pouvant être envisagées du moment que toutes ces formes de réalisation actionnent les éléments mâles 32G et 32D de la façon décrite juste ci-dessus.

Suivant une disposition optionnelle avantageuse, qui est mise en œuvre dans l'exemple considéré sur les figures et qui permet que les éléments mâles 32G et 32D soient déplacés suivant une trajectoire maîtrisée entre leur position de connexion et leur position de déconnexion, le support 30 est conçu pour, en plus de supporter les éléments mâles 32G et 32D et le mécanisme 40, guider en déplacement ce mécanisme et/ou ces éléments mâles. En particulier, le support 30 comprend à cet effet un fourreau 42, qui s'étend selon l'axe Y-Y, en étant centré sur cet axe, et qui inclut deux parties terminales opposées, à savoir une partie terminale gauche 42.1G et une partie terminale droite 42.1D, reliées l'une à l'autre par une partie courante 42.2 du fourreau 42, comme bien visible sur les figures 4 à 6.

Les parties terminales 42.1G et 42.1D sont respectivement prévues pour que les éléments mâles 32G et 32D en position de connexion se déploient axialement à l'extérieur d'elles, comme montré sur les figures 4 et 5, et pour que les éléments mâles 32G et 32D en position de déconnexion s'escamotent à l'intérieur d'elles, comme montré sur la figure 6. De plus, ces parties terminales 42.1G et 42.1D reçoivent, à l'intérieur d'elles, respectivement les organes 34G et 34D, en coopérant par complémentarité de formes avec ces organes pour les guider en translation selon l'axe Y-Y, cette coopération par complémentarité de formes étant par exemple prévue entre un diamètre interne des parties terminales 42.1G et 42.1 D et un diamètre externe des organes 34G et 34D. En outre, ces parties terminales 42.1G et 42.1D logent, avantageusement en totalité, le ressort gauche 38 et, respectivement, le ressort droit du dispositif 23, en formant un appui, notamment axial, pour ce ressort. Par ailleurs, notamment afin que la sollicitation manuelle sur les reliefs 36G et 36D soit appliquée facilement et confortablement par l'utilisateur, la partie courante 42.2 du fourreau 42 forme une échancrure 42.3 qui, comme bien visible sur les figures 4 à 6, permet à la main de l'utilisateur d'accéder aux reliefs 36G et 36D pour s'en saisir et les solliciter, en particulier par respectivement deux doigts de sa main.

On notera que l'échancrure 42.3 peut avantageusement être conformée de manière que, lorsque les éléments mâles 32G et 32D sont en position de déconnexion, les organes 34G et 34D se retrouvent partiellement visibles à l'intérieur de cette échancrure dans le sens où l'extrémité de chaque organe 34G, 34D, tournée vers l'autre organe 34D, 34G, est agencée hors de la partie terminale correspondante 42.1G, 42.1D du fourreau 42 et, de ce fait, à l'intérieur de l'échancrure 42.3, comme bien visible sur la figure 6, tandis que, lorsque les éléments mâles 32G et 32D sont en position de connexion, les organes 34G et 34D sont, pour l'essentiel voire pour la totalité, hors de l'échancrure 42.3, en étant logés en totalité ou en quasi-totalité à l'intérieur des parties terminales 42.1G et 42.2G du fourreau 42, comme bien visible sur la figure 5. Le fait que les organes 34D et 34G soient partiellement visibles dans l'échancrure 42.3 lorsque les éléments mâles 32G et 32D sont en position de déconnexion et soient, au moins pour l'essentiel, non visibles dans cette échancrure lorsque les éléments mâles sont en position de connexion, peut être mis à profit par l'utilisateur pour s'assurer que les éléments mâles sont effectivement dans la position que l'utilisateur souhaite. En particulier, lorsque l'utilisateur relâche toute sollicitation manuelle sur le dispositif de connexion 23 après l'avoir rapporté entre les montants 16G et 16D de la poussette 10 en vue que les éléments mâles passent automatiquement de leur position de déconnexion à leur position de connexion pour se mettre en prise avec les logements femelles 18G et 18D, l'utilisateur peut, en observant l'échancrure 42.3, vérifier visuellement que les organes 34G et 34D ont disparu à l'intérieur des parties terminales 42.1G et 42.1 D du fourreau 42, comme sur la figure 5 : si l'un et/ou l'autre des organes 34G et 34D restent visibles dans l'échancrure comme sur la figure 6, c'est que l'un et/ou l'autre des éléments mâles 32G et 32D ne se sont pas ou se sont mal engagés dans le logement femelle 18G, 18D associé, et ce pour diverses raisons imprévisibles, ce qui avertira alors l'utilisateur du défaut de connexion effective ou complète entre l'accessoire 20 et la poussette 10. En pratique, pour faciliter ce contrôle visuel, l'extrémité de chaque organe 34G, 34D, qui est tournée vers l'autre organe 34D, 34G et qui est visible dans l'échancrure 42.3 lorsque les éléments mâles 32G et 32D sont en position de déconnexion, peut être colorisée ou bien munie d'un motif d'avertissement, tel qu'une flèche en couleur par exemple.

Extérieurement, le fourreau 42 est avantageusement dimensionné pour faciliter le positionnement du dispositif 43 vis-à-vis des parties arrière 11.1G et 11.1D du cadre 11 de la poussette 10. Plus précisément, comme bien visible sur les figures 5 et 6, la dimension totale, selon l'axe Y-Y, du fourreau 42 est égale, à un jeu fonctionnel près, à la distance séparant, selon l'axe X-X, les débouchés respectifs des logements femelles 18G et 18D : ainsi, lorsque les éléments mâles 32G et 32D sont en position de déconnexion, le fourreau 42 peut être agencé entre les parties arrière 11.1G et 11.1D du cadre 11, notamment entre les montants 16G et 16D, avec son axe Y-Y parallèle à l'axe X-X. De plus, les faces extérieures respectives des parties terminales 42.1G et 42.1D du fourreau 42 sont avantageusement dimensionnées pour interférer respectivement avec les berceaux 19G et 19D, en se positionnant, par complémentarité de formes, contre les surfaces supérieures respectives de ces berceaux, telles que la surface 19.1G du berceau 19G, de manière à aligner les axes Y-Y et X-X : en accueillant de manière complémentaire et concentrique les faces extérieures des parties terminales 42.1G et 42.1D du fourreau 42, les surfaces supérieures des berceaux 19G et 19D alignent les logements femelles 18G et 18D avec les éléments mâles 32G et 32D, positionnant ainsi ces logements sur la trajectoire des éléments mâles lorsque ces derniers passent de leur position de déconnexion à leur position de connexion.

L'utilisation de l'ensemble de transport 1 est la suivante.

Lorsque l'ensemble de transport 1 est dans la configuration montrée sur les figures 1 et 5, c'est-à-dire lorsque l'accessoire 20 est connecté à la poussette 10 par l'intermédiaire du dispositif 23, cet ensemble de transport 1 permet de véhiculer, à la fois, un enfant dans la poussette 10 et un autre enfant sur l'accessoire 20 : le premier enfant est installé dans l'organe de réception 15, tandis que le second enfant se tient debout ou assis sur la plateforme 24 de l'accessoire 20. Un adulte est en mesure de faire rouler l'ensemble de transport 1 sur le sol, en poussant l'organe de poussée 14 : la poussette 10, ainsi entraînée vers l'avant, tracte l'accessoire 20 par l'intermédiaire du dispositif 23, en particulier par coopération entre les éléments mâles 32G et 32D en position de connexion et les logements femelles 18G et 18D recevant ces éléments mâles. La transmission des efforts de traction est efficace et pérenne, les contraintes correspondantes étant efficacement encaissées par les montants 16G et 16D et, surtout, les inserts 17G et 17D qui reportent ces contraintes sur le train de roues arrière 13. Ainsi, l'ensemble de transport 1 est particulièrement robuste. Lors du roulement de l'ensemble de transport 1 sur un sol irrégulier, par exemple lors du franchissement d'un obstacle , la poussette 10 et l'accessoire 20 restent fermement connectés, tout en pouvant pivoter l'un par rapport à l'autre autour de l'axe Y-Y par coopération entre les éléments mâles 32G et 32D et les logements femelles 18G et 18D : ce pivotement est libre, en particulier sans butée d'interférence entre le fourreau 42 du support 30 et les berceaux 19G et 19D du cadre 11 du fait que leurs surfaces respectives, tournées l'une vers l'autre, sont complémentaires et concentriques. Il en résulte avantageusement que l'accessoire 20 peut même être pivoté vers le haut autour de l'axe Y-Y, en étant décollé du sol, jusqu'à être rabattu contre l'arrière de la poussette 10 : cette configuration rabattue de l'accessoire, qui peut être maintenue par sanglage ou autrement, n'est mise en œuvre que lorsque l'accessoire n'est pas utilisé sans toutefois que l'utilisateur souhaite déconnecter l'accessoire de la poussette.

Lorsque l'utilisateur souhaite dégager l'accessoire 20 vis-à-vis de la poussette 10, il n'utilise qu'une seule de ses deux mains pour solliciter les reliefs 36G et 36D, notamment en faisant coopérer deux doigts de sa main avec, respectivement, le relief 36G et le relief 36D : par cette seule main, l'utilisateur sollicite alors le mécanisme 40 pour, comme expliqué plus haut, entraîner conjointement les éléments mâles 32G et 32D depuis leur position de connexion, montrée à la figure 5, jusqu'à leur position de déconnexion, montrée à la figure 6, et ce en surmontant la contrainte élastique qu'opposent les ressorts gauche 38 et droit du dispositif 23. Une fois que les éléments mâles 32G et 32D sont dans leur position de déconnexion, l'utilisateur emporte l'accessoire 20, toujours par l'intermédiaire de sa seule main sollicitant le mécanisme 40, de manière à dégager l'accessoire 20 vis-à-vis du cadre 11 de la poussette, notamment en sortant le support 30 d'entre les montants 16G et 16D de ce cadre.

Lorsque l'utilisateur souhaite reconnecter l'accessoire 20 à la poussette 10, il met en œuvre les gestes inverses que ceux décrits juste ci-dessus, avantageusement en portant l'accessoire 20 et en sollicitant le mécanisme 40 par une seule et même main. Le positionnement relatif entre la poussette 10 et l'accessoire 20, en particulier le positionnement des logements femelles 18G et 18D vis-à-vis des éléments mâles 32G et 32D en position de déconnexion juste avant que ces éléments mâles ne soient rappelés automatiquement jusqu'à leur position de connexion par le mécanisme 40 au moment où l'utilisateur va relâcher sa sollicitation manuelle, est facilité par les surfaces supérieures respectives des berceaux 19G et 19D du cadre 11, comme expliqué plus haut.

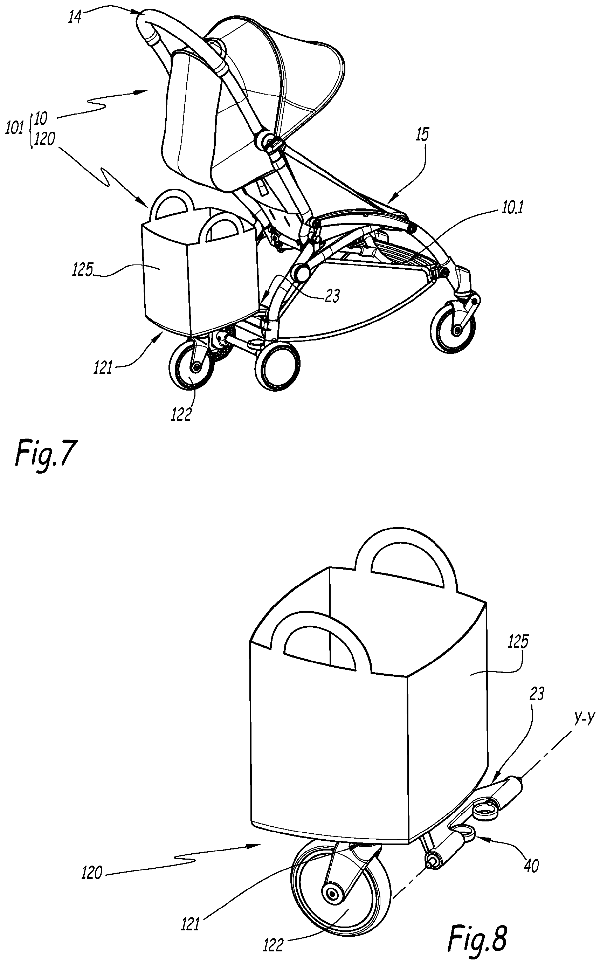

Sur les figures 7 et 8 est représenté un ensemble de transport 101 correspondant à une forme de réalisation alternative de l'ensemble de transport 1.

L'ensemble de transport 101 comporte la poussette 10 décrite précédemment, ainsi qu'un accessoire de poussette 120 différent de l'accessoire 20.

Plus précisément, l'accessoire 120 comporte un châssis 121 qui, de manière fonctionnellement similaire au châssis 21 de l'accessoire 20, est pourvu d'au moins une roue d'appui et de roulement au sol 122. Par ailleurs, le châssis 121 porte le dispositif 23 décrit précédemment, ce dispositif 23 permettant de connecter de manière réversible l'accessoire 120 au cadre 11 de la poussette 10, comme illustré par la figure 7.

L'accessoire 120 se distingue de l'accessoire 20 par des aménagements relatifs à son châssis 121, dans le sens où, plutôt que d'avoir une plateforme sur laquelle un enfant peut se tenir debout et/ou assis, le châssis 121 supporte un cabas 125 permettant d'y stocker divers objets et marchandises que l'utilisateur souhaite véhiculer conjointement avec la poussette 10. L'accessoire 120 s'apparente ainsi à un chariot. Bien entendu, la forme de réalisation du cabas 125 n'est pas limitative et la représentation qui en est faite sur les figures 7 et 8 n'est qu'illustrative.

Quelle que soit sa forme de réalisation, le cabas 125 permet à l'ensemble de transport 101 de disposer d'une capacité de transport de marchandises bien plus grande que celle de la seule poussette 10. En effet, la poussette 10 intègre généralement un panier ou similaire, tel qu'un panier bas référencé 10.1 sur la figure 7 pour la poussette 10 considérée ici, ce panier bas 10.1 étant placé au-dessous de l'organe de réception 15 et accroché au cadre 11. Cependant, la capacité de transport d'un tel panier, par exemple du panier bas 10.1, est limitée, notamment de par son implantation au sein de la poussette. Grâce au cabas 125 de l'accessoire 120, la capacité de transport de marchandises est augmentée de manière pratique et efficace, tout en maintenant confort, esthétisme et sécurité pour l'ensemble de transport 101.

Selon un aspect de réalisation avantageux, la dimension totale du châssis 121 dans la direction avant-arrière est prévue courte, pour entraver le moins possible la marche de l'adulte qui pousse la poussette 10 par l'intermédiaire de son organe de poussée 14, et la roue 122 est prévue à la fois omnidirectionnelle et en un seul exemplaire, en étant située en région centrale du châssis 121. La manœuvrabilité de l'ensemble de transport 101 est alors remarquable, la roue 122 pouvant supporter l'essentiel de la charge placée dans le cabas 125 qui la surplombe.

Selon un autre aspect de réalisation avantageux, le fond du cabas 125 est, sur sa face tournée vers le châssis 121, pourvu d'un élément tronconique saillant, convergent vers le bas, tandis que la plateforme du châssis 121 est, sur sa face tournée vers le cabas 125, pourvu d'un logement tronconique, qui est complémentaire de l'élément tronconique précité et qui est avantageusement agencé à l'aplomb vertical de la roue 122. La coopération mécanique entre l'élément et le logement tronconiques précités assure un placement précis et un maintien stable du cabas 125 sur le châssis 121. De plus, cet élément et ce logement tronconiques sont avantageusement équipés de moyens de solidarisation réversible instantanée, tels que des aimants et/ou des clips et/ou des systèmes à crochets et bouclettes de type VELCRO (marque déposée) et/ou etc. : ces moyens de solidarisation réversible instantanée sont prévus pour, à la fois, éviter la désolidarisation inopinée du cabas 125 vis-à-vis du châssis 121, par exemple lorsque l'ensemble de transport 101 franchit un obstacle, roule sur un sol irrégulier ou suit une trajectoire très incurvée, et permettre à l'utilisateur de séparer le cabas vis-à-vis du châssis sous réserve d'appliquer au cabas une contrainte à la fois suffisamment forte et dirigée dans une direction prédéterminée, par exemple verticalement vers le haut. Bien entendu, plus globalement, d'autres aménagements respectifs du fond du cabas 125 et de la plateforme du châssis 121 sont envisageables pour obtenir, par coopération entre ces aménagements, les effets expliqués ci-dessus de placement, de maintien et de solidarisation réversible instantanée entre ce cabas et ce châssis.

Selon une disposition optionnelle avantageuse, une liaison amovible peut être rajoutée directement entre le cabas 125 et le cadre 11 de la poussette 10, par exemple sous forme de sangles, de brides, de boucles, d'attaches de type VELCRO, etc. Cette liaison renforce la stabilité du cabas au sein de l'ensemble de transport 101 et/ou maintient en forme le cabas lorsqu'il est vide ou peu rempli de manière à éviter qu'il ne s'affaisse sur lui-même du fait de la souplesse de son matériau constitutif.

On notera que, suivant des considérations similaires à celles développées plus haut quant au fait que l'accessoire 20 puisse être pivoté vers le haut autour de l'axe Y-Y par rapport à la poussette 10, en étant décollé du sol, jusqu'à être rabattu vers l'arrière de la poussette, l'accessoire 120 peut, lui aussi grâce à la coopération entre son dispositif 23 et le cadre 11 de la poussette 10, être pivoté vers le haut autour de l'axe Y-Y par rapport à la poussette 10, en étant décollé du sol : l'accessoire 120 peut alors être rabattu jusqu'à l'intérieur du panier bas 10.1 de la poussette, grâce à la faible dimension antéropostérieure du chariot 21 et grâce à soit la souplesse du matériau constitutif du cabas 125, soit la désolidarisation du cabas 125 vis-à-vis du châssis 121.

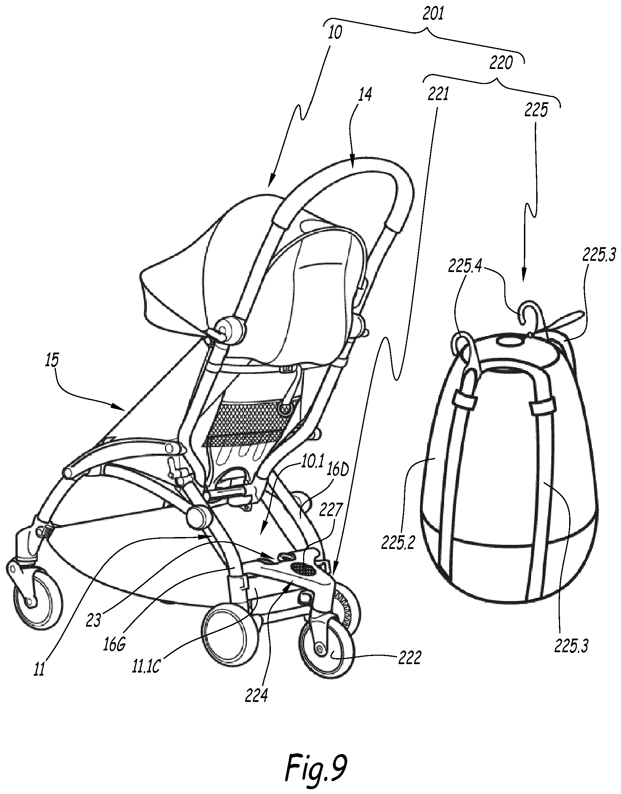

Sur les figures 9 à 15 est représenté un ensemble de transport 201 correspondant à une forme de réalisation alternative de l'ensemble de transport 1 et de l'ensemble de transport 101. L'ensemble de transport 201 peut être considéré comme une variante de l'ensemble de transport 101.

L'ensemble de transport 201 comporte la poussette 10 décrite précédemment, ainsi qu'un accessoire de poussette 220 qui est différent de l'accessoire 20 et qui, de façon similaire à l'accessoire 120, s'apparente à un chariot.

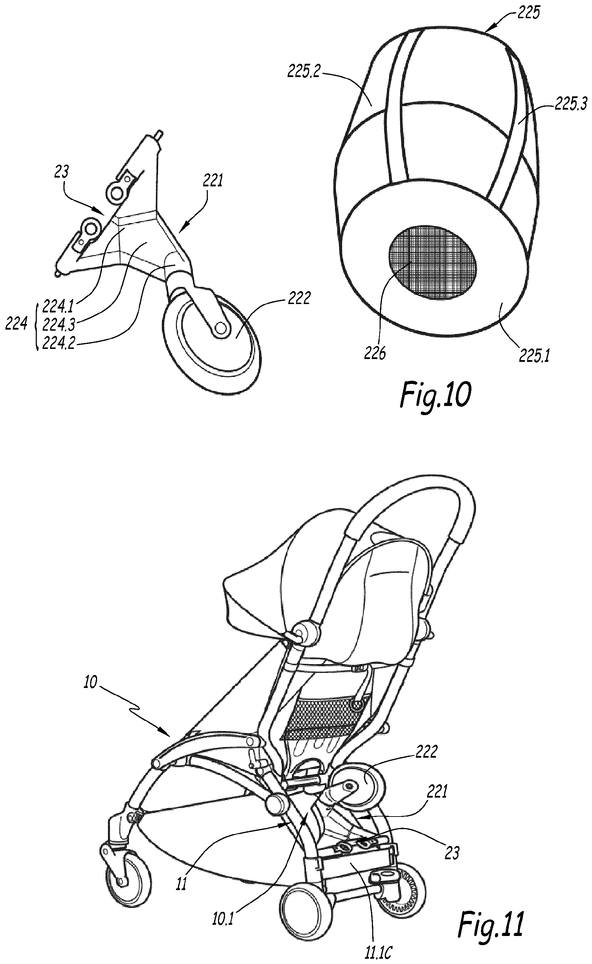

Plus précisément, comme bien visible sur les figures 9 et 10, l'accessoire 220 comporte un châssis 221 qui, de manière fonctionnellement similaire au châssis 121 de l'accessoire 120, est pourvu d'une unique roue d'appui et de roulement au sol 222 qui est omnidirectionnelle. Par ailleurs, le châssis 221 porte le dispositif de connexion 23 décrit précédemment, ce dispositif 23 permettant de connecter de manière réversible l'accessoire 220 au cadre 11 de la poussette 10, comme illustré par les figures 9 et 11 à 15. De plus, l'accessoire 220 comporte un cabas 225 permettant d'y stocker divers objets et marchandises que l'utilisateur souhaite véhiculer conjointement avec la poussette 10, en faisant supporter ce cabas par le châssis 221. Comme expliqué précédemment pour le cabas 125, le cabas 225 augmente de manière pratique et efficace la capacité de transport de marchandises pour l'ensemble de transport 201 comparativement à la seule poussette 10, tout en maintenant confort, esthétisme et sécurité.

Le châssis 221 et le cabas 225 de l'accessoire 220 sont conçus pour être solidarisés l'un à l'autre de manière réversible et instantanée. A cet effet, un fond 225.1 du cabas 225 est équipé, en particulier sur sa face tournée vers le châssis 221 lorsque ce dernier supporte le cabas, d'un organe de solidarisation 226, comme bien visible sur la figure 10, tandis qu'une plateforme 224 du châssis 221 est équipée, en particulier sur sa face tournée vers le cabas lorsque le châssis supporte le cabas, un organe de solidarisation 227, comme bien visible sur la figure 9 : les organes 226 et 227 permettent de solidariser le cabas 225 au châssis 221 à la fois de manière réversible, dans le sens où la coopération de ces organes 226 et 227 évite la désolidarisation inopinée du cabas 225 vis-à-vis du châssis 221 lors des déplacements de l'ensemble de transport 201, tout en permettant à l'utilisateur de séparer le cabas vis-à-vis du châssis sous réserve d'appliquer au cabas une contrainte à la fois suffisamment forte et dirigée dans une direction prédéterminée, par exemple verticalement vers le haut, et de manière instantanée, dans le sens où les organes 226 et 227 coopèrent l'un avec l'autre dès qu'ils sont mis au contact l'un de l'autre sans qu'il soit nécessaire d'activer leur coopération par une manipulation additionnelle à celle consistant à placer l'organe 226 contre l'organe 227, notamment à celle consistant à déposer sous l'effet de la gravité l'organe 226 sur l'organe 227. En pratique, les organes 226 et 227 sont des aimants et/ou des clips automatiques et/ou des systèmes à crochets et bouclettes de type VELCRO (marque déposée) et/ou etc.

Dans le prolongement des considérations qui précèdent, la base du cabas 225 est avantageusement prévue circulaire et est dimensionnée pour caler une portion avant du cabas 225 entre les montants 16G et 16D de la poussette 10. De cette façon, le positionnement du cabas lors de sa mise en place sur le châssis 221 est facilité pour l'utilisateur qui peut utiliser les montants du cadre de la poussette pour guider, par auto-centrage, le cabas que l'utilisateur dépose « au jeté ».

Suivant des considérations similaires développées plus haut pour le châssis 121, le châssis 221 présente une dimension antéropostérieure totale qui est courte. Le châssis 221 ne gêne ainsi pas l'adulte qui pousse la poussette 10 lorsque l'accessoire 220, connecté au cadre 11 de la poussette, roule sur le sol derrière la poussette comme sur les figures 9 et 12 à 15. De plus, moyennant le pivotement de l'accessoire 220 vers le haut autour de l'axe Y-Y alors que le dispositif 23 maintient la connexion entre le châssis 221 et la poussette 10, le châssis 221, notamment sans le cabas 225, peut être rabattu à l'intérieur du panier bas 10.1 de la poussette 10, comme illustré par la figure 11.

Selon un aspect de réalisation avantageux, la plateforme 224 présente une forme effilée qui s'étend dans la direction antéropostérieure du châssis 221, comme bien visible sur les figures 9 et 10. La plateforme 224 ayant cette forme effilée inclut :
- une extrémité avant 224.1 au niveau de laquelle est agencé le dispositif de connexion 23, l'axe de translation Y-Y défini par ce dispositif 23 s'étendant notamment de manière perpendiculaire à la direction longitudinale de la plateforme 224 ;
- une extrémité arrière 224.2 au niveau de laquelle est agencée la roue 222, plus précisément au niveau de laquelle est agencé l'axe de pivotement, s'étendant transversalement à la plateforme 224, autour duquel la roue omnidirectionnelle 222 peut librement pivoter pour changer d'orientation ; et
- une partie courante 224.3, qui relie l'une à l'autre les extrémités avant 224.1 et arrière 224.2 et qui porte l'organe de solidarisation 227.

La conformation effilée de la plateforme 224 présente de nombreux intérêts pratiques. En effet, cela limite substantiellement les risques d'interférence entre le châssis 221 et les pieds de l'adulte poussant la poussette 10 lors de la marche de cet adulte. De plus, la roue 221 peut pivoter sur 360° autour de son axe de pivotement sans risquer d'interférer avec le train de roues arrière 13 de la poussette 10. De surcroît, la charge produite par le cabas 225 est répartie efficacement, et donc ainsi stabilisée, entre les montants 16G et 16D du cadre 11 de la poussette, via le dispositif de connexion 23, et la roue 222. Par ailleurs, un enfant est dissuadé de grimper sur le châssis 221 en l'absence du cabas 225, dans la mesure où cet enfant ne pourra pas se maintenir aisément debout sur la plateforme 224 étroite.

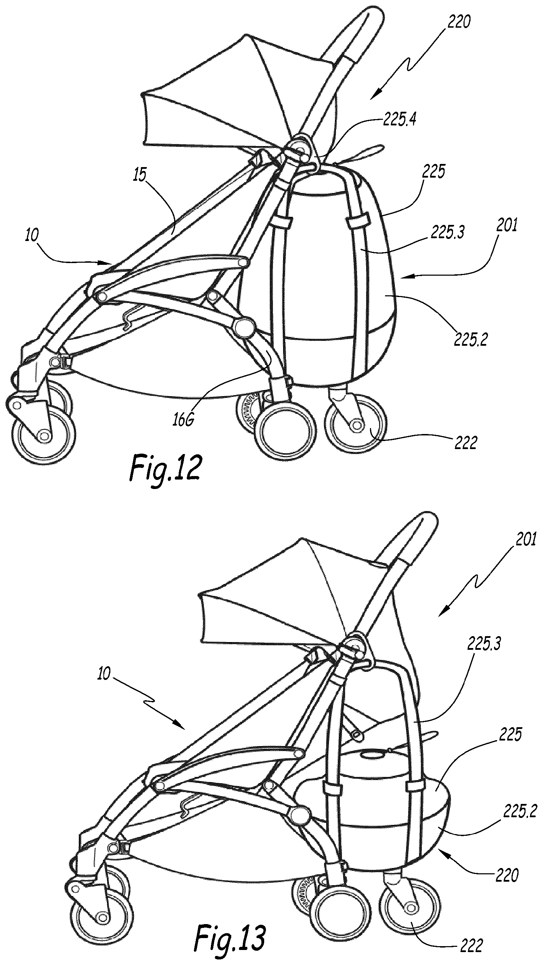

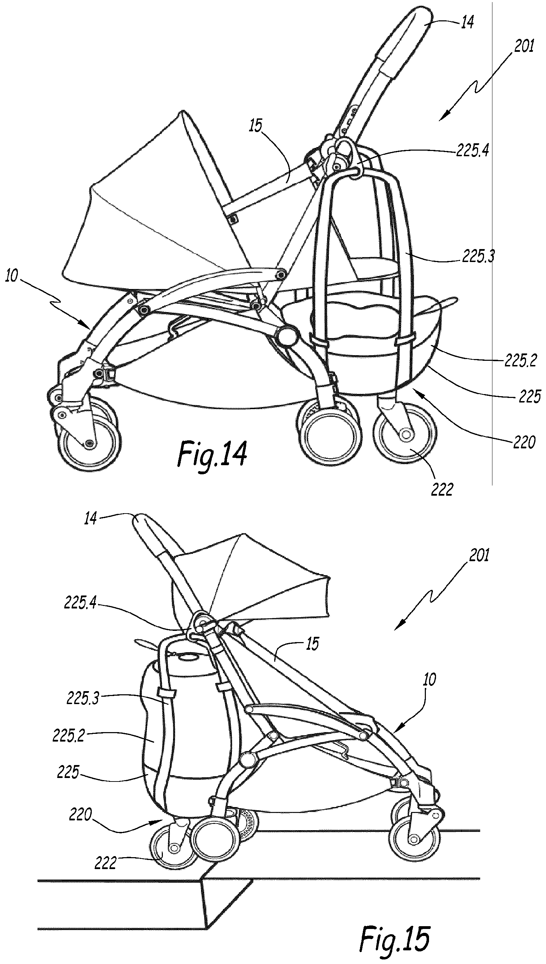

Selon une disposition optionnelle particulièrement avantageuse, le cabas 225 comporte, en plus d'un corps principal 225.2 qui est prévu souple et qui peut ainsi se déformer pour former une poche de stockage à volume ajustable, des aménagements permettant de lier, directement et de manière amovible, le corps principal 225.2 du cabas 225 et le cadre 11 de la poussette 10. Dans l'exemple de réalisation considéré sur les figures, ces aménagements comportent, comme bien visible sur la figure 9, des sangles 225.3, respectivement gauche et droite, qui s'étendent respectivement sur le flanc gauche et sur le flanc droit du corps principal 225.2 et qui, à leur sommet formant avantageusement une anse de portage du cabas, coopèrent respectivement avec des crochets 225.4, respectivement gauche et droit, liés à des parties, respectivement gauche et droite, du cadre 11 de la poussette 10, comme montré sur les figures 12 à 15. En pratique, les crochets gauche et droit 225.4 sont soit portés à demeure par les sangles 225.3 en étant amovibles, par accrochage, au cadre 11, soit portés à demeure par le cadre 11, par exemple par clipsage, en étant amovibles, par accrochage, aux sangles 225.3, soit amovibles aussi bien par rapport au cadre 11 qu'aux sangles 225.3. Bien entendu, d'autres formes de réalisation, que celle envisagée sur les figures, sont envisageables pour ces aménagements. Dans tous les cas, les intérêts de tels aménagements sont nombreux et remarquables. En effet, la liaison directe et amovible qu'assurent ces aménagements entre le corps principal 225.2 du cabas 225 et le cadre 11 de la poussette 10 maintient en forme le cabas lorsque ce dernier est vide ou peu rempli de manière à éviter que le cabas ne s'affaisse sur lui-même du fait de la souplesse de son corps principal 225.2, comme mis en évidence sur les figures 12 et 13. Un tel maintien en forme du cabas 225 est particulièrement avantageux lorsque son corps principal 225.2 se retrouve agencé au-dessous d'une nacelle, en tant qu'organe de réception 15, débordant vers l'arrière au-dessus du châssis 221, comme illustré par la figure 14. La liaison assurée par les aménagements précités renforce également substantiellement la stabilité du cabas 225 au sein de l'ensemble de transport 201, notamment lorsque ce dernier franchit un obstacle, tel qu'une marche, comme illustré par la figure 15. En d'autres termes, les aménagements précités, tels que les sangles 225.3 et les crochets 225.4 dans l'exemple considéré sur les figures, renforcent la solidarisation entre le cabas 225 et le châssis 221 assurée par les organes 226 et 227, tout en limitant le pivotement vers le bas, autour de l'axe Y-Y par rapport à la poussette 10, de l'accessoire 220 lorsque la roue 222 n'est plus appuyée sur le sol en raison d'une différence de niveau d'appui par rapport à la poussette 10 comme sur la figure 15. Pour ce qui concerne ce dernier aspect, on notera que la retenue de l'accessoire 220 en pivotement vers le bas lorsque la roue 222 se retrouve au-dessus d'une dénivellation du sol peut être assurée, en complément ou en remplacement de la liaison amovible et directe entre le cabas 225 et le cadre 11 de la poussette, par l'appui direct, vers le bas, de la plateforme 224 du châssis 221 contre une butée 11.1C solidaire du cadre 11 de la poussette et agencée entre les parties arrière 11.1G et 11.1D, notamment reliant l'un à l'autre les montants 16G et 16D comme envisagé sur la figure 9.

Les ensembles de transport 101 et 201 illustrent la multiplicité des formes de réalisation que peut prendre un accessoire, tel que les accessoires 20, 120 et 220, à même d'être connecté de manière réversible au cadre 11 de la poussette 10, cette connexion étant réalisée par le dispositif 23 par l'intermédiaire duquel cet accessoire, une fois connecté à la poussette, peut être tracté par cette poussette lorsque cette dernière est poussée.

## Revendications

1. Accessoire pour poussette (20 ; 120 ; 220), comportant :
- un châssis (21 ; 121 ; 221) pourvu d'au moins une roue d'appui et de roulement au sol (22 ; 122), et
- un dispositif (23) de connexion réversible au cadre (11) d'une poussette (10), ce dispositif étant porté par le châssis,
**caractérisé en ce que** le dispositif (23) est adapté pour être rapporté entre un montant gauche (16G) et un montant droit (16D) de la poussette (10), qui appartiennent respectivement à une partie arrière gauche (11.1G) et à une partie arrière droite (11.1D) du cadre (11) de la poussette, qui sont parallèles l'un à l'autre et qui ont des faces respectives, au regard l'une de l'autre, dans lesquelles sont respectivement creusés un premier logement femelle (18G) et un second logement femelle (18D), le dispositif (23) comportant :
- un premier élément mâle (32G) qui est mobile par rapport au châssis (21) entre une position de connexion, dans laquelle le premier élément mâle est reçu de manière complémentaire dans le premier logement femelle (18G) lorsque le dispositif est rapporté entre les montants gauche et droit de la poussette, et une position de déconnexion, dans laquelle le premier élément mâle est hors du premier logement,
- un second élément mâle (32D) qui est mobile par rapport au châssis entre une position de connexion, dans laquelle le second élément mâle est reçu de manière complémentaire dans le second logement femelle (18D) lorsque le dispositif est rapporté entre les montants gauche et droit de la poussette, et une position de déconnexion, dans laquelle le second élément mâle est hors du second logement, et
- un mécanisme (40) d'actionnement des premier et second éléments mâles, ce mécanisme étant adapté pour :
- par sollicitation d'une seule main d'un utilisateur, entraîner conjointement les premier et second éléments mâles de leur position de connexion à leur position de déconnexion, et
- en l'absence de sollicitation, rappeler automatiquement les premier et second éléments mâles de leur position de déconnexion à leur position de connexion.

2. Accessoire pour poussette suivant la revendication 1, **caractérisé en ce que** le mécanisme (40) comporte, pour chacun des premier (32G) et second (32D) éléments mâles :
- un organe d'entraînement (34G, 34D), qui permet d'entraîner manuellement l'élément mâle correspondant de sa position de connexion à sa position de déconnexion et qui est pourvu d'un relief de préhension (36G, 36D), les reliefs de préhension respectivement associés aux premier et second éléments mâles étant conformés pour être sollicités respectivement par deux doigts d'une même main de l'utilisateur pour entraîner conjointement les premier et second éléments mâles, et
- un ressort de rappel (38), qui est mécaniquement interposé entre l'organe d'entraînement correspondant (34G, 34D) et le châssis (21 ; 121 ; 221) et qui rappelle élastiquement l'élément mâle correspondant (32G, 32D) de sa position de déconnexion à sa position de connexion.

3. Accessoire pour poussette suivant l'un des revendications 1 ou 2, **caractérisé en ce que** les premier (32G) et second (32D) éléments mâles sont mobiles en translation selon un même axe (Y-Y) entre leur position de connexion et leur position de déconnexion, et **en ce que** les premier et second éléments mâles se translatent de leur position de connexion à leur position de déconnexion en se rapprochant l'un de l'autre selon l'axe.

4. Accessoire pour poussette suivant les revendications 2 et 3 prises ensemble, **caractérisé en ce que** les organes d'entraînement (34G, 34D) respectivement associés aux premier (32G) et second (32D) éléments mâles sont mobiles en translation selon l'axe (X-X) et ont leurs reliefs de préhension (36G, 36D) qui se rapprochent l'un de l'autre selon cet axe lorsqu'ils sont sollicités manuellement pour entraîner conjointement les premier et second éléments mâles de leur position de connexion à leur position de déconnexion.

5. Accessoire pour poussette suivant l'une quelconque des revendications 1 à 4, **caractérisé en ce que** le dispositif (23) comporte en outre un support (30) qui supporte et guide en déplacement le mécanisme (40) et les premier (32G) et second (32D) éléments mâles, ce support étant lié fixement au châssis (21 ; 121 ; 221) soit à demeure, soit de manière amovible.

6. Accessoire pour poussette suivant les revendications 1 à 5 prises ensemble, **caractérisé en ce que** le support (30) comprend un fourreau (42) qui s'étend selon l'axe (Y-Y) et qui inclut :
- une première partie terminale (42.1G) :
- à l'extérieur de laquelle se déploie axialement le premier élément mâle (32G) en position de connexion,
- à l'intérieur de laquelle s'escamote axialement le premier élément mâle (32G) en position de déconnexion,
- qui reçoit intérieurement l'organe d'entraînement (34G) associé au premier élément mâle, en coopérant par complémentarité de formes avec cet organe d'entraînement pour le guider en translation selon l'axe (Y-Y), et
- qui loge le ressort (38) associé au premier élément mâle, en formant un appui pour ce ressort ;
- une seconde partie terminale (42.1D) :
- qui est axialement opposée à la première partie terminale (42.1G),
- à l'extérieur de laquelle se déploie axialement le second élément mâle (32D) en position de connexion,
- à l'intérieur de laquelle s'escamote axialement l'élément mâle en position de déconnexion,
- qui reçoit intérieurement l'organe d'entraînement (34D) associé au second élément mâle, en coopérant par complémentarité de formes avec cet organe d'entraînement pour le guider en translation selon l'axe (Y-Y), et
- qui loge le ressort associé au second élément mâle, en formant un appui pour ce ressort ; et
- une partie courante (42.2), qui relie l'une à l'autre les première (42.1G) et seconde (42.1D) parties terminales et qui forme une échancrure (42.3) d'accès conjoint aux reliefs de préhension (36G, 36D).

7. Ensemble de transport (1 ; 101 ; 201), comprenant :
- une poussette (10) comportant un cadre (11), qui est pourvu de roues d'appui et de roulement au sol (12AV, 12AR) et qui inclut une partie arrière gauche (11.1G), comprenant un montant gauche (16D), et une partie arrière droite (11.1D), comprenant un montant droit (16D) qui est parallèle au montant gauche, un premier logement femelle (18G) et un second logement femelle (18D) étant creusés respectivement dans une face du montant gauche et dans une face du montant droit, qui sont en regard l'une de l'autre ; et
- un accessoire pour poussette (20; 120 ; 220), qui est conforme à l'une quelconque des revendications précédentes et dont les premier (32G) et second (32D) éléments mâles en position de connexion sont respectivement reçus dans les premier (18G) et second (18D) logements femelles pour connecter l'accessoire au cadre (11) de la poussette (10) lorsque le dispositif (23) de l'accessoire est rapporté entre les montants gauche (16G) et droit (16D) de la poussette.

8. Ensemble de transport suivant la revendication 7, **caractérisé en ce que** les montants, respectivement gauche (16G) et droit (16D), sont respectivement pourvus intérieurement d'un insert (17G, 17D) de liaison à un même train de roues arrière (13) du cadre (11), et **en ce que** les premier (18G) et second (18D) logements femelles sont respectivement délimités dans l'insert (17G) du montant gauche (16G) et dans l'insert (17D) du montant droit (16D).

9. Ensemble de transport suivant l'une des revendications 7 ou 8, **caractérisé en ce que** le cadre (11) est pourvu de surfaces (19.1G) de positionnement de l'accessoire (20 ; 120 ; 220), qui coopèrent par complémentarité de formes avec le dispositif (23) de manière à positionner les premier (18G) et second (18D) logements femelles sur la trajectoire des premier (32G) et second (32D) éléments mâles lorsque le dispositif (23) de l'accessoire (20 ; 120 ; 220) est rapporté entre les montants gauche (16G) et droit (16D) de la poussette (10) et que les premier et second éléments mâles passent de leur position de déconnexion à leur position de connexion.

10. Ensemble de transport suivant l'une quelconque des revendications 7 à 9, **caractérisé en ce que** les premier (32G) et second (32D) éléments mâles en position de connexion et les premier (18G) et second (18D) logements femelles forment conjointement une liaison pivot entre le dispositif (23) de l'accessoire (20 ; 120 ; 220) et le cadre (11) de la poussette (10).

11. Ensemble de transport suivant la revendication 10, **caractérisé en ce que** la poussette (10) intègre un panier bas (10.1), accroché au cadre (11) et placé au-dessous d'un organe de réception (15) adapté pour réceptionner un enfant à véhiculer par la poussette, et **en ce que** le châssis (121 ; 221) de l'accessoire (120 ; 220) est conformé de manière à, tout en restant connecté au cadre de la poussette par le dispositif (23), être rabattu à l'intérieur du panier bas par pivotement autour de la liaison pivot par rapport au cadre de la poussette.

12. Ensemble de transport suivant l'une quelconque des revendications 7 à 11, **caractérisé en ce que** l'accessoire (20) comporte une plateforme (24) adaptée pour supporter un enfant se tenant debout ou assis sur cette plateforme alors que le châssis (21) est connecté au cadre (11) de la poussette (10) par le dispositif (23) et que la ou les roues (22) du châssis reposent sur le sol.

13. Ensemble de transport suivant l'une quelconque des revendications 7 à 11, **caractérisé en ce que** l'accessoire (120 ; 220) comporte un cabas (125 ; 225), ainsi que des moyens de solidarisation réversible et instantanée, qui sont constitués d'au moins un premier organe de solidarisation (226), porté par un fond (225.1) du cabas (125 ; 225), et d'au moins un second organe de solidarisation (227), porté par une plateforme (224) du châssis (121 ; 221) et qui sont adaptés pour solidariser le cabas au châssis par coopération réversible et instantanée entre les premier et second organes de solidarisation.

14. Ensemble de transport suivant la revendication 13, **caractérisé en ce que** la plateforme (224) du châssis (221) présente une forme effilée ayant :
- une première extrémité longitudinale (224.1) au niveau de laquelle est agencé le dispositif (23),
- une seconde extrémité longitudinale (224.2), qui est opposée à la première extrémité longitudinale, et
- une partie courante (224.3), qui relie l'une à l'autre les première et seconde extrémités longitudinales et qui porte ledit au moins un second organe de solidarisation (227) ; et
**en ce que** le châssis (224) est pourvu d'une unique roue d'appui et de roulement sur le sol (222), ayant un axe de rotation qui est prévu librement pivotant par rapport à la plateforme (224) autour d'un axe de pivotement, qui s'étend transversalement à la plateforme et qui est agencé au niveau de la seconde extrémité longitudinale (224.2) de la plateforme.

15. Ensemble de transport suivant l'une des revendications 13 ou 14, **caractérisé en ce que** le cabas (125 ; 225) comporte un corps principal (225.2) souple, qui est déformable pour former une poche de stockage à volume ajustable, et des éléments de liaison (225.3, 225.4) adaptés pour lier de façon amovible le corps principal du cabas directement avec le cadre (11) de la poussette (10).

## Patentansprüche

1. Zubehör für Kinderwagen (20; 120; 220), aufweisend:
- ein Chassis (21; 121; 221), das mit wenigstens einem Rad zum Aufliegen und zum Rollen auf dem Boden (22; 122) ausgestattet ist, und
- eine Vorrichtung (23) zur reversiblen Verbindung mit dem Rahmen (11) eines Kinderwagens (10), wobei diese Vorrichtung von dem Chassis getragen wird,
**dadurch gekennzeichnet, dass** die Vorrichtung (23) angepasst ist, um zwischen eine linke Stütze (16G) und eine rechte Stütze (16D) des Kinderwagens (10) montiert zu werden, die jeweils zugehörig zu einem hinteren linken Abschnitt (11.1G) und einem hinteren rechten Abschnitt (11.1D) des Rahmens (11) des Kinderwagens gehören, die parallel zueinander sind und die jeweils zugeordnete Seiten haben, die einander zugewandt sind, in welchen jeweils zugeordnet eine erste Aufnahmebuchse (18G) und eine zweite Aufnahmebuchse (18D) ausgenommen sind, wobei die Vorrichtung (23) aufweist:
- ein erstes Steckerelement (32G), das relativ zu dem Chassis (21) bewegbar ist zwischen einer Verbindungsposition, in welcher das erste Steckerelement in komplementäre Weise in der ersten Aufnahmebuchse (18G) aufgenommen ist, wenn die Vorrichtung zwischen die linke und die rechte Stütze des Kinderwagens montiert ist, und einer Löseposition, in welcher das erste Steckerelement aus der ersten Aufnahme herausgenommen ist,
- ein zweites Steckerelement (32D), das relativ zu dem Chassis bewegbar ist zwischen einer Verbindungsposition, in welcher das zweite Steckerelement in komplementärer Weise in der zweiten Aufnahmebuchse (18D) aufgenommen ist, wenn die Vorrichtung zwischen die linke und die rechte Stütze des Kinderwagens montiert ist, und einer Löseposition, in welcher das zweite Steckerelement aus der zweiten Aufnahme herausgenommen ist, und
- einen Mechanismus (40) zur Betätigung des ersten und des zweiten Steckerelements, wobei dieser Mechanismus angepasst ist, um:
- durch Beaufschlagung von einer einzigen Benutzerhand das erste und das zweite Steckerelement gemeinsam anzutreiben von deren Verbindungsposition aus in deren Löseposition, und
- bei Nicht-Beaufschlagung das erste und das zweite Steckerelement automatisch rückzustellen von deren Löseposition aus in deren Verbindungsposition.

2. Zubehör für Kinderwagen gemäß Anspruch 1, **dadurch gekennzeichnet, dass** der Mechanismus (40) für jedes von dem ersten (32G) und dem zweiten (32D) Steckerelement aufweist:
- ein Antriebsorgan (34G, 34D), welches es ermöglich, das korrespondierende Steckerlement manuell anzutreiben von dessen Verbindungsposition aus in dessen Löseposition, und welches mit einem Greifrelief (36G, 36D) versehen ist, wobei die Greifreliefs, die jeweils zugeordnet mit dem ersten und dem zweiten Steckerelement verknüpft sind, eingerichtet sind, um jeweils zugeordnet von zwei Fingern einer gleichen Hand des Benutzers beaufschlagt zu werden zum gemeinsamen Antreiben des ersten und des zweiten Steckerelements, und
- eine Rückstellfeder (38), die mechanisch zwischen das korrespondierende Antriebsorgan (34G, 34D) und das Chassis (21; 121; 221) zwischengeschaltet ist und die das korrespondierende Steckerelement (32G, 32D) von dessen Löseposition aus in dessen Verbindungsposition elastisch rückstellt.

3. Zubehör für Kinderwagen gemäß einem der Ansprüche 1 oder 2, **dadurch gekennzeichnet, dass** das erste (32G) und das zweite (32D) Steckerelement translationsbewegbar sind entlang einer gleichen Achse (Y-Y) zwischen deren Verbindungsposition und deren Löseposition, und dass das erste und das zweite Steckerelement sich entlang der Achse translationsbewegen von ihrer Verbindungsposition aus in ihre Löseposition unter sich einander annähern.

4. Zubehör für Kinderwagen gemäß den Ansprüchen 2 und 3 zusammengenommen, **dadurch gekennzeichnet, dass** die Antriebsorgane (34G, 34D), die jeweils zugeordnet mit dem ersten (32G) und dem zweiten (32D) Steckerelement verknüpft sind, entlang der Achse (X-X) translationsbewegbar sind und ihre Greifreliefs (36G, 36D), die sich einander annähern entlang dieser Achse, wenn sie manuell beaufschlagt werden, haben zum gemeinsamen Antreiben des ersten und des zweiten Steckerelements von deren Verbindungsposition aus in deren Löseposition.

5. Zubehör für Kinderwagen gemäß irgendeinem der Ansprüche 1 bis 4, **dadurch gekennzeichnet, dass** die Vorrichtung (23) ferner aufweist eine Halterung (30), die den Mechanismus (40) und das erste (32G) und das zweite (32D) Steckerelement hält und verschiebeführt, wobei diese Halterung fest mit dem Chassis (21; 121; 221) verbunden ist in permanenter oder in lösbarer Weise.

6. Zubehör für Kinderwagen gemäß den Ansprüchen 1 bis 5 zusammengenommen, **dadurch gekennzeichnet, dass** die Halterung (30) eine Hülse (42) aufweist, sich entlang der Achse (Y-Y) erstreckt und die aufweist:
- einen ersten Endabschnitt (42.1G):
- nach außen von diesem das erste Steckerelement (32G) in die Verbindungsposition axial ausfährt,
- nach innen von diesem das erste Steckerelement (32G) in die Löseposition axial einfährt,
- der innen das Antriebsorgan (34G), das mit dem ersten Steckerelement verknüpft ist, aufnimmt in Zusammenwirkung, via Formen-Komplementarität, mit diesem Antriebsorgan, um dieses entlang der Achse (Y-Y) translationszuführen, und
- der die Feder (38), die mit dem ersten Steckerelement verknüpft ist, aufnimmt unter Ausbildung einer Auflage für diese Feder,
- einen zweiten Endabschnitt (42.1D):
- der dem ersten Endabschnitt (42.1G) axial entgegengesetzt ist,
- nach außen von diesem das zweite Steckerelement (32D) in die Verbindungsposition axial ausfährt,
- nach innen von diesem das Steckerelement in die Löseposition axial einfährt,
- der innen das Antriebsorgan (34D), das mit dem zweiten Steckerelement verknüpft ist, aufnimmt in Zusammenwirkung, via Formen-Komplementarität, mit diesem Antriebsorgan, um dieses entlang der Achse (Y-Y) translationszuführen, und
- der die Feder (38), die mit dem zweiten Steckerelement verknüpft ist, aufnimmt unter Ausbildung einer Auflage für diese Feder, und
- einen Laufabschnitt (42.2), der den ersten (42.1G) und den zweiten (42.1D) Endabschnitt miteinander verbindet und der eine Aussparung (42.3) zum gemeinsamen Zugang zu den Greifreliefs (36G, 36D) bildet.

7. Transport-Einrichtung (1; 101; 201), aufweisend:
- einen Kinderwagen (10) mit einem Rahmen (11), der mit Rädern zum Aufliegen und zum Rollen auf dem Boden (12AV, 12AR) versehen ist und der aufweist einen hinteren linken Abschnitt (11.1G), der eine linke Stütze (16D) aufweist, und einen hinteren rechten Abschnitt (11.1D), der einen rechte Stütze (16D) aufweist, die parallel zu der linken Stütze ist, wobei eine erste Aufnahmebuchse (18G) und eine zweite Aufnahmebuchse (18D) jeweils zugeordnet in einer Seite der linken Stütze und in einer Seite der rechten Stütze ausgespart sind, die sich einander gegenüberliegen, und
- ein Zubehör für Kinderwagen (20; 120; 220), welches gemäß irgendeinem der vorigen Ansprüche eingerichtet ist und von dem das erste (32G) und das zweite (32D) Steckerelement in der Verbindungsposition jeweils zugeordnet in der ersten (18G) und der zweiten Aufnahmebuchse (18D) aufgenommen sind zum Verbinden des Zubehörs mit dem Rahmen (11) des Kinderwagens (10), wenn die Vorrichtung (23) des Zubehörs zwischen die linke (16G) und die rechte (16D) Stütze des Kinderwagens montiert ist.

8. Transport-Einrichtung gemäß Anspruch 7, **dadurch gekennzeichnet, dass** die linke (16G) und die rechte (16D) Stütze innen jeweils versehen sind mit einem Einsatz (17G, 17D) zur Verbindung mit einem gleichen Zug Hinterräder (13) des Rahmens (11) und dass die erste (18G) und die zweite (18D) Aufnahmebuchse jeweils zugeordnet in dem Einsatz (17G) der linken Stütze (16G) und in dem Einsatz (17D) der rechten Stütze (16D) begrenzt sind.

9. Transport-Einrichtung gemäß einem der Ansprüche 7 oder 8, **dadurch gekennzeichnet, dass** der Rahmen (11) versehen ist mit Flächen (19.1G) zum Positionieren des Zubehörs (20; 120; 220), die via Formen-Komplementarität mit der Vorrichtung (23) zusammenwirken, um die erste (18G) und die zweite (18D) Aufnahmebuchse auf der Bahn des ersten (32G) und des zweiten (32D) Steckerelements zu positionieren, wenn die Vorrichtung (23) des Zubehörs (20; 120; 220) zwischen die linke (16G) und die rechte (16D) Säule des Kinderwagens (10) montiert ist, und welche das erste und das zweite Steckerelement von deren Löseposition in deren Verbindungsposition passieren.

10. Transport-Einrichtung gemäß irgendeinem der Ansprüche 7 bis 9, **dadurch gekennzeichnet, dass** das erste (32G) und das zweite (32D) Steckerelement in der Verbindungsposition und die erste (18G) und die zweite (18D) Aufnahmebuchse gemeinsam eine Schwenkverbindung zwischen der Vorrichtung (23) des Zubehörs (20; 120; 220) und dem Rahmen (11) des Kinderwagens (10) bilden.

11. Transport-Einrichtung gemäß Anspruch 10, **dadurch gekennzeichnet, dass** der Kinderwagen (10) einen unteren Korb (10.1) integriert hat, der an den Rahmen (11) angehängt ist und der unter einem Aufnahmeorgan (15) platziert ist, das angepasst ist zum Aufnehmen eines mittels des Kinderwagens zu transportierenden Kinds, und dass das Chassis (121; 221) des Zubehörs (120; 220) eingerichtet ist, um, insgesamt mittels der Vorrichtung (23) in Verbindung mit dem Rahmen des Kinderwagens verbleibend, ins Innere des unteren Korbs geklappt zu werden mittels Schwenkens um die Schwenkverbindung bezüglich des Rahmens des Kinderwagens.

12. Transport-Einrichtung gemäß irgendeinem der Ansprüche 7 bis 11, **dadurch gekennzeichnet, dass** das Zubehör (20) eine Plattform (24) aufweist, die angepasst ist zum Tragen eines Kindes, das sich auf der Plattform stehend festhält oder auf dieser sitzt, während das Chassis (21) mit dem Rahmen (11) des Kinderwagens (10) mittels der Vorrichtung (23) verbunden ist und während das oder die Räder (22) des Chassis auf dem Boden aufliegen.

13. Transport-Einrichtung gemäß irgendeinem der Ansprüche 7 bis 11, **dadurch gekennzeichnet, dass** das Zubehör (120; 220) aufweist einen Einkaufskorb (125; 225) sowie Mittel zum reversiblen prompten Befestigen, die gebildet sind von wenigstens einem ersten Befestigungsorgan (226), das von einem Boden (225.1) des Einkaufskorbs (125; 225) getragen ist, und von wenigstens einem zweiten Befestigungsorgan (227), das von einer Plattform (224) des Chassis (121; 221) getragen ist, und die angepasst sind zum Befestigen des Einkaufskorbs am Chassis via reversibler prompter Zusammenwirkung zwischen dem ersten und dem zweiten Befestigungsorgan.

14. Transport-Einrichtung gemäß Anspruch 13, **dadurch gekennzeichnet, dass** die Plattform (224) des Chassis (221) eine spitz zulaufende Form hat, die hat:
- ein erstes Längsende (224.1), auf Niveau dessen die Vorrichtung (23) angeordnet ist,
- ein zweites Längsende (224.2), das dem ersten Längsende entgegengesetzt ist, und
- einen Laufabschnitt (224.3), der das erste und das zweite Längsende miteinander verbindet und der das wenigstens eine zweite Befestigungsorgan (227) trägt, und
dass das Chassis (224) versehen ist mit einem einzigen Rad zum Aufliegen und Rollen auf dem Boden (222), das eine Drehachse hat, die bezüglich der Plattform (224) um eine Schwenkachse freischwenkend vorgesehen ist, die sich quer zur Plattform erstreckt und die auf Niveau des zweiten Längsendes (224.2) der Plattform angeordnet ist.

15. Transport-Einrichtung gemäß einem der Ansprüche 13 oder 14, **dadurch gekennzeichnet, dass** der Einkaufskorb (125; 225) aufweist einen flexiblen Hauptkorb (225.2), der deformierbar ist zum Bilden einer Aufbewahrungstasche mit einstellbarem Volumen, und Verbindungselemente (225.3, 225.4), die angepasst sind zum Verbinden des Hauptkorbs des Einkaufskorbs in einer entfernbaren Weise direkt mit dem Rahmen (11) des Kinderwagens (10) .

## Claims

1. A pushchair accessory (20; 120; 220), including:
- a chassis (21; 121; 221) provided with at least one bearing wheel for rolling on the ground (22; 122), and
- a device (23) for reversibly connecting to the frame (11) of a pushchair (10), said device being borne by the chassis,
**characterized in that** the device (23) is suitable for being attached between a left upright (16G) and a right upright (16D) of the pushchair (10), which respectively belong to a left rear part (11.1G) and a right rear part (11.1D) of the frame (11) of the pushchair, which are parallel to one another and which have respective faces, opposite one another, in which a first female housing (18G) and a second female housing (18D) are respectively hollowed, the device (23) including:
- a first male element (32G) that is movable relative to the chassis (21) between a connection position, in which the first male element is received in a complementary manner in the first female housing (18G) when the device is attached between the left and right uprights of the pushchair, and a disconnection position, in which the first male element is outside the first housing,
- a second male element (32D) that is movable relative to the chassis between a connection position, in which the second male element is received in a complementary manner in the second female housing (18D) when the device is attached between the left and right uprights of the pushchair, and a disconnection position, in which the second male element is outside the second housing, and
- a mechanism (40) for actuating the first and second male elements, said mechanism being suitable for:
- by stress from a single hand of a user, jointly driving the first and second male elements from their connection position to their disconnection position, and
- in the absence of stress, automatically returning the first and second male elements from their disconnection position to their connection position.

2. The pushchair accessory according to claim 1, **characterized in that** the mechanism (40) includes, for each of the first (32G) and second (32D) male elements:
- a drive member (34G, 34D), which drives the corresponding male element manually from its connection position to its disconnection position and which is provided with a gripping relief (36G, 36D), the gripping reliefs respectively associated with the first and second male elements being configured to be stressed respectively by two fingers of a same hand of the user to jointly drive the first and second male elements, and
- a return spring (38), which is mechanically inserted between the corresponding drive member (34G, 34D) and the chassis (21; 121; 221) and which resiliently returns the corresponding male element (32G, 32D) from its disconnection position to its connection position.

3. The pushchair accessory according to one of claims 1 or 2, **characterized in that** the first (32G) and second (32D) male elements are translatable along a same axis between their connection position and their disconnection position, and **in that** the first and second male elements translate from their connection position to their disconnection position, coming closer to one another along the axis.

4. The pushchair accessory according to claims 2 and 3 taken together, **characterized in that** the drive members (34G, 34D) respectively associated with the first (32G) and second (32D) male elements are translatable along the axis (X-X) and have their gripping reliefs (36G, 36D) come closer to one another along said axis when they are stressed manually to jointly drive the first and second male elements from their connection position to their disconnection position.

5. The pushchair accessory according to any one of claims 1 to 4, **characterized in that** the device (23) further includes a support (30) that supports and guides the movement of the mechanism (40) and the first (32G) and second (32D) male elements, this support being fixedly connected to the chassis (21; 121; 221) either permanently or removably.

6. The pushchair accessory according to claims 1 to 5 taken together, **characterized in that** the support (30) comprises a sheath (42) that extends along the axis (Y-Y) and that includes:
- a first end part (42.1G):
- outside which the first male element (32G) deploys axially in the connection position,
- inside which the first male element (32G) retracts axially in the disconnection position,
- which inwardly receives the drive member (34G) associated with the first male element, cooperating by shape complementarity with said drive member to guide it in translation along the axis (Y-Y), and
- which houses the spring (38) associated with the first male element, forming a bearing for said spring;
- a second end part (42.1D):
- which is axially opposite the first end part (42.1G),
- outside which the second male element (32D) deploys axially in the connection position,
- inside which the second male element retracts axially in the disconnection position,
- which inwardly receives the drive member (34D) associated with the second male element, cooperating by shape complementarity with said drive member to guide it in translation along the axis (Y-Y), and
- which houses the spring associated with the second male element, forming a bearing for said spring; and
- a running part (42.2), which connects the first (42.1G) and second (42.1D) end parts to one another and which forms a joint access notch (42.3) to the gripping reliefs (36G, 36D).

7. A transport assembly (1; 101; 201), comprising:
- a pushchair (10) including a frame (11), which is provided with bearing wheels for rolling on the ground (12AV, 12AR) and which includes a left rear part (11.1G), comprising a left upright (16D), and a right rear part (11.1D), comprising a right upright (16D) that is parallel to the left upright, a first female housing (18G) and a second female housing (18D) respectively being hollowed in the face of the left upright and in the face of the right upright, which are opposite one another; and
- a pushchair accessory (20; 120; 220), which is according to any one of the preceding claims and the first (32G) and second (32D) male elements of which in the connection position are respectively received in the first (18G) and second (18D) female housings to connect the accessory to the frame (11) of the pushchair (10) when the device (23) of the accessory is attached between the left (16G) and right (16D) uprights of the pushchair.

8. The transport assembly according to claim 7, **characterized in that** the uprights, respectively left (16G) and right (16D), are respectively inwardly provided with an insert (17G, 17D) for connecting to a same rear wheel train (13) of the frame (11), and **in that** the first (18G) and second (18D) female housings are respectively delimited in the insert (17G) of the left upright (16G) and in the insert (17D) of the right upright (16D).

9. The transport assembly according to any one of claims 7 or 8, **characterized in that** the frame (11) is provided with positioning surfaces (19.1G) of the accessory (20; 120; 220), which cooperate by shape complementarity with the device (23) so as to position the first (18G) and second (18D) female housings on the trajectory of the first (32G) and second (32D) male elements when the device (23) of the accessory (20; 120; 220) is attached between the left (16G) and right (16D) uprights of the pushchair (10) and the first and second male elements go from their disconnection position to their connection position.

10. The transport assembly according to any one of claims 7 to 9, **characterized in that** the first (32G) and second (32D) male elements in the connection position in the first (18G) and second (18D) female housings jointly form a pivot link between the device (23) of the accessory (20; 120; 220) and the frame (11) of the pushchair (10).

11. The transport assembly according to claim 10, **characterized in that** the pushchair (10) incorporates a lower basket (10.1), hooked on the frame (11) and placed below a receiving member (15) suitable for receiving a child to be conveyed by the pushchair, and **in that** the chassis (121; 221) of the accessory (120; 220) is configured so as, while remaining connected to the frame of the pushchair by the device (23), to be folded down inside the lower basket by pivoting around the pivot link relative to the frame of the pushchair.

12. The transport assembly according to any one of claims 7 to 11, **characterized in that** the accessory (20) includes a platform (24) suitable for bearing a child standing up or sitting on said platform while the chassis (21) is connected to the frame (11) of the pushchair (10) by the device (23) and the wheel(s) (22) of the chassis rest on the ground.

13. The transport assembly according to any one of claims 7 to 11, **characterized in that** the accessory (120; 220) includes a tote bag (125; 225), as well as reversible and instantaneous securing means, which are made up of at least a first securing member (226), supported by a bottom (225.1) of the tote bag (125; 225), and at least one second securing member (227), supported by a platform (224) of the chassis (121; 221) and which are suitable for securing the tote bag to the chassis by reversible and instantaneous cooperation between the first and second securing members.

14. The transport assembly according to claim 13, **characterized in that** the platform (224) of the chassis (221) has a slender shape having:
- a first longitudinal end (224.1) at which the device (23) is arranged,
- a second longitudinal end (224.2), which is opposite the first longitudinal end, and
- a running part (224.3), which connects the first and second longitudinal ends to each other and which bears said at least one securing member (227); and
and **in that** the chassis (224) is provided with a single bearing wheel for rolling on the ground (222), having a rotation axis that is provided freely pivoting relative to the platform (224) around a pivot axis, which extends transversely to the platform and which is arranged at the second longitudinal end (224.2) of the platform.

15. The transport assembly according to any one of claims 13 or 14, **characterized in that** the tote bag (125; 225) includes a flexible main body (225.2), which is deformable to form a storage pouch of adjustable volume, and connecting elements (225.3, 225.4) suitable for removably connecting the main body of the tote bag directly with the frame (11) of the pushchair (10).
